# EUROPEAN PATENT APPLICATION

(11) **EP 2 413 646 A1**
(43) Date of publication of application: **01.02.2012**
(21) Application number: 10799631.6
(22) Date of filing: 14.07.2010
(51) Int. Cl.: H04W 56/00, H04W 4/04

(54) **RADIO COMMUNICATION DEVICE, RADIO COMMUNICATION SYSTEM, RADIO COMMUNICATION METHOD AND PROGRAM FOR EXECUTING RADIO COMMUNICATION METHOD**

(30) Priority: 15.07.2009 JP 2009166558; 06.08.2009 JP 2009183003
(71) Applicant: Panasonic Corporation, Kadoma-shi Osaka 571-8501 (JP)
(72) Inventor: YAMAMOTO, Masahiro, Chuo-ku Osaka-shi Osaka 540-6207 (JP); UEDA, Yoshihiro, Chuo-ku Osaka-shi Osaka 540-6207 (JP); HORIIKE, Yoshio, Chuo-ku Osaka-shi Osaka 540-6207 (JP)
(74) Representative: Schwabe - Sandmair - Marx
(86) International application number: PCT/JP2010/004582
(87) International publication number: WO 2011/007567

(57) **Abstract**

A radio communication system of the present invention comprises a radio communication device which transmits or receives a first beacon signal and a second beacon signal. A beacon transmission radio communication device transmits the first beacon signal in a preset timing pattern P1, while a beacon signal reception radio communication device receives the first beacon signal in a preset timing pattern P2. The beacon transmission radio communication device transmits the second beacon signal upon a passage of a delay time period R which is shorter than a standby time period Q which is shorter than the timing pattern P1, after the standby time period Q has passed. The beacon signal reception radio communication device attempts to receive the second beacon signal according to a passage of the delay time period R which is shorter than the standby time period Q which is shorter than the timing pattern P2, after the standby time period Q has passed.

## Description

### Technical Field

The present invention relates to a radio (wireless) communication device, a radio communication system, a radio communication method, and a program for executing the radio communication method. In particular, the present invention relates to a radio communication device, a radio communication system, a radio communication method, and a program for executing the radio communication method, in which beacon signals are transmitted and received among plural radio communication devices to synchronize times of the respective radio communication devices.

### Background Art

As radio (wireless) communication systems, a variety of forms such as wireless LAN, mobile communication, a local area radio network, a transportation radio, and a municipal disaster management radio communication network have been developed and put into practice use. Recently, as an example of a new radio communication system, for example, a radio (wireless) meter reading system for utility meters has been proposed, in which communication is performed with utility meters of gas, tap water, electric power, and the like, to measure usage amounts of them.

In the radio communication system, in general, beacon signals are transmitted and received between a plurality of radio communication devices constituting the radio communication system. Since the transmission and reception of the beacon signals enables synchronization between the radio communication devices, timings at which various data are transmitted and received can be controlled.

If all of the radio communication devices constituting the radio communication system have standard electric wave timer functions in addition to clock circuits, then the times of the clock circuits in all of the radio communication devices are corrected adaptively to a standard electric wave all the time, thereby achieving synchronization between the radio communication devices. Since the standard electric wave timer function increases a circuit scale, a cost will increase. To avoid this, conventionally, there has been proposed a technique, in which only a particular radio communication device has a standard electric wave timer function, and other radio communication device receive the beacon signals to be synchronized with the particular radio communication device. Specifically, for example, Patent Literature 1 discloses such a radio (wireless) communication system.

This radio communication system provides a technique relating to wireless LAN, and is configured to include a radio access point having a built-in electric wave timer circuit, and a radio communication terminal. The radio access point receives a standard electric wave transmitted from a standard electric wave transmission site, obtains time data of a standard time, and transmits the beacon signal at intervals of 100ms on the basis of the time synchronized with standard time based on standard time data. The radio communication terminal receives the beacon signal intermittently in synchronization with the time when the beacon signal is transmitted from the radio access point, based on the standard time data.

In this radio communication system, since there exist a plurality of radio access points, and the times of all of the radio access points are synchronized with the standard time, they transmit the beacon signals at the same timing. Therefore, if a radio communication terminal moves to an area outside a communication area of a particular radio access point A, that radio communication terminal cannot receive the beacon signal from the radio access point A, but continues intermittent reception at the intermittent reception timings synchronized with the standard time, without shifting to a continuous reception operation. If the radio communication terminal enters an area of another radio access point B, it can receive the beacon signal from the radio access point B, because the radio access point B transmits the beacon signal at the same timing as that of the radio access point A.

As a technique for providing synchronization among a plurality of radio communication devices, Patent Literature 2 discloses an automatic meter reading system, which provides a technique which can address a disturbing signal. The automatic meter reading system provides a technique relating to an automatic meter reading system for flow meters such as a gas meter, a tap water meter, and an electric power meter, and includes a first radio communication device for obtaining a meter reading value measured by the flow meter, and a second radio communication device for receiving the meter reading value data from the first radio communication device.

The automatic meter reading system is required to be battery-driven to be supplied with electric power. For the purpose of reducing a consumed current, the first and second radio communication devices use an intermittent operation scheme. Timings of their intermittent operations are synchronized with each other by transmitting and receiving a synchronization signal among these radio communication devices. If the disturbing signal exists at the timings at which the synchronization signal is transmitted and received, proper transmission and reception of the synchronization signal is unfeasible. To avert this, the radio communication device performs control in such a manner that a carrier detector means detects occurrence of a disturbing signal, and the intermittent operation timing is changed as necessary.

### Citation Lists

### Patent Literature

Patent Literature 1: Japanese Laid-Open Patent Application Publication No. 2005-72677
Patent Literature 2: Japanese Laid-Open Patent Application Publication No. Hei. 07-284170

### Summary of the Invention

### Technical Problem

However, when the times of the plural radio communication devices are synchronized with each other using the above stated conventional techniques, they cannot satisfactorily address a situation where the beacon signals collide with each other.

For example, for easier explanation, it is supposed that a radio communication device which transmits the beacon signal is "beacon transmission terminal," and a radio communication device which receives the beacon signal is "beacon reception terminal." In the technique disclosed in Patent Literature 1, it is premised that a plurality of beacon transmission terminals (radio access points) are located such that communication ranges of the beacon signals of the plurality of beacon transmission terminals do not overlap with each other. Because of this, this technique cannot address a case where the beacon transmission terminals are unavoidably fixed at positions, which would cause the beacon signals to collide with each other. Furthermore, in the case where the radio communication system is configured in such a manner that the beacon reception terminal is provided at a fixed position and the beacon transmission terminal is movable, a probability that the beacon signals will collide with each other will increase if the plurality of beacon transmission terminals move.

In the technique disclosed in Patent Literature 2, it is premised that a duration of the disturbing signal is short. Because of this, the synchronization signal is received at any one of timings of reception performed plural times, by shifting the timings of transmission/reception operation. However, this technique cannot address a case where a plurality of beacon signals continue to collide with each other for a relatively long time period.

If the beacon reception terminal is provided with a standard electric wave timer function to avert collision between the beacon signals, for example, the circuit scale will increase and a cost will increase as describe above.

The present invention has been made to solve the above mentioned problems, and an object of the present invention is to provide a technique capable of effectively averting collision between beacon signals without increasing a cost, even in a case where the beacon signals are transmitted from a plurality of radio communication devices in a radio communication system.

### Solution to Problem

To solve the above described problem, a radio communication device of the present invention is a radio communication device for use in a radio communication system including a plurality of radio communication devices which communicate a beacon signal between the radio communication devices, said radio communication device being configured to perform at least either transmission or reception of the beacon signal; said radio communication device comprising: a radio communication unit for performing radio communication; and a communication control unit for controlling an operation timing of the radio communication unit to communicate the beacon signal intermittently; **characterized in that**: a first beacon signal and a second beacon signal are transmitted as the beacon signal; the communication control unit controls an operation of the radio communication unit to transmit the first beacon signal in a preset timing pattern P1; and the communication control unit controls the operation of the radio communication unit to transmit the second beacon signal upon a passage of a delay time period R which is shorter than a standby time period Q which is shorter than the timing pattern P1, after the standby time period Q has passed.

In the radio communication device of the present invention, the radio communication device is configured to receive the first beacon signal and the second beacon signal; the communication control unit controls the operation of the radio communication unit to attempt to receive the first beacon signal in a preset timing pattern P2; and the communication control unit controls the operation of the radio communication unit to attempt to receive the second beacon signal according to a passage of the delay time period R which is shorter than the standby time period Q which is shorter than the timing pattern P2, after the standby time period Q has passed.

A radio communication system of the present invention comprises a plurality of radio communication devices having the above configuration, as communication terminals.

To solve the above described problem, a radio communication method of the present invention is a radio communication method for use in a radio communication system including a radio communication device which transmits a beacon signal intermittently as a master radio terminal, and a radio communication device which receives the beacon signal intermittently as a slave radio terminal, said method being characterized by comprising the steps of: transmitting a first beacon signal in a preset timing pattern P1 from the master radio terminal; attempting to receive the first beacon signal in a preset timing pattern P2 in the slave radio terminal; transmitting the second beacon signal from the master radio terminal, upon a passage of a delay time period R which is shorter than a standby time period Q which is shorter than the timing pattern P1, after the standby time period Q has passed; and attempting to receive in the slave radio terminal the second beacon signal according to a passage of the delay time period R which is shorter than the standby time period Q which is shorter than the timing pattern P2, after the standby time period Q has passed.

A program for executing the radio communication method of the present invention, is a program described in a format which is readable by a computer incorporated in each of radio communication devices included in a radio communication system, the radio communication devices being a radio communication device which transmits a beacon signal as a master radio terminal, and a radio communication device which receives the beacon signal as a slave radio terminal, the program being executed on the computer such that transmission or reception of the beacon signal is performed; **characterized in that**: the radio communication device is configured to transmit or receive the first beacon signal and the second beacon signal intermittently, as the beacon signal; when the radio communication device is the master radio terminal, the computer executing the steps of: transmitting the first beacon signal in a preset timing pattern P1; and transmitting the second beacon signal upon a passage of a delay time period R which is shorter than a standby time period Q which is shorter than the timing pattern P1, after the standby time period Q has passed; and when the radio communication device is the slave radio terminal, the computer executing the steps of: attempting to receive the first beacon signal in a preset timing pattern P2; and attempting to receive the second beacon signal according to a passage of the delay time period R which is shorter than the standby time period Q which is shorter than the timing pattern P2, after the standby time period Q has passed.

The above and further objects, features and advantages of the invention will more fully be apparent from the following detailed description with accompanying drawings.

### Advantageous Effects of the Invention

As described above, in accordance with the present invention, it is possible to avert collision between beacon signals effectively without increasing a cost, even when beacon signals are transmitted from a plurality of radio communication devices in a radio communication system.

### Brief Description of the Drawings

[Fig. 1] Fig. 1 is a schematic view showing an exemplary configuration of a radio communication system according to Embodiment 1 of the present invention.
[Fig. 2] Fig. 2 is a block diagram showing an exemplary configuration of major constituents of a beacon transmission radio communication device according to Embodiment 1 of the present invention, which is a radio communication device for use in the radio communication system of Fig. 1.
[Fig. 3] Fig. 3 is a block diagram showing an exemplary configuration of major constituents of a beacon reception radio communication device according to Embodiment 1 of the present invention, which is a radio communication device for use in the radio communication system of Fig. 1.
[Fig. 4] Fig. 4(a) is a schematic view showing exemplary transmission and reception of beacon signals performed between radio communication devices and exemplary configurations of time slots, and Fig. 4(b) is a schematic view showing an exemplary configuration of the time slots in the schematic view of Fig. 4(a).
[Fig. 5] Fig. 5(a) is a schematic view showing an exemplary signal format of a beacon signal transmitted and received between the radio communication devices in the radio communication system of Fig. 1, Fig. 5(b) is a schematic view showing an exemplary signal format of a polling signal or an adapter calling signal transmitted and received between the radio communication devices, and Fig.5(c) is a schematic view showing exemplary constituents of a repeat header contained in the signal format of Fig. 5(b).

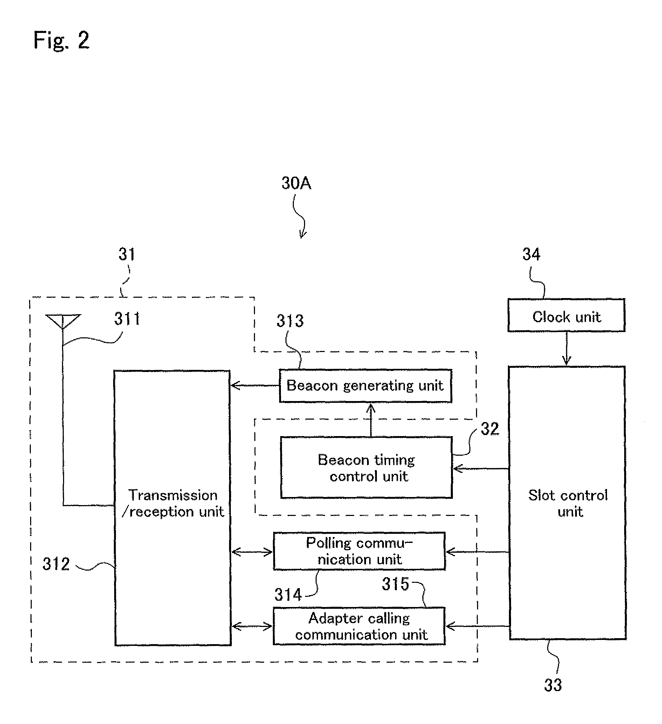

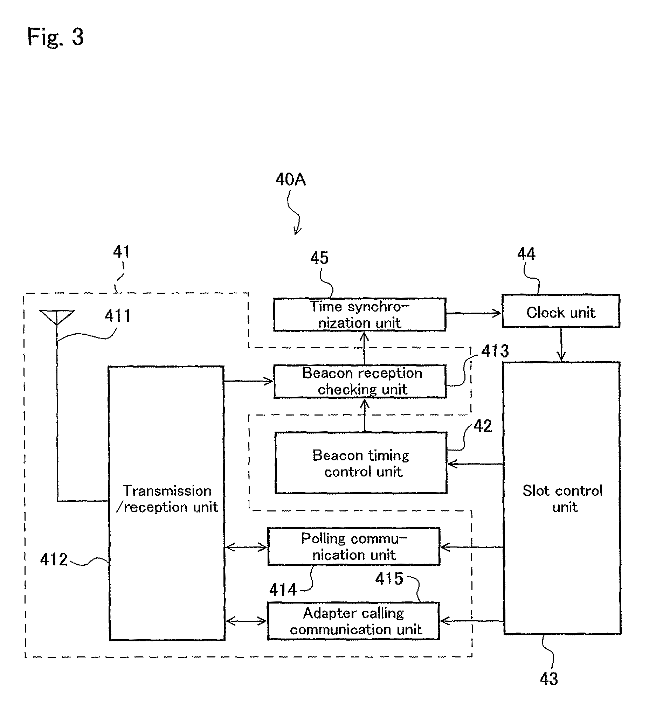

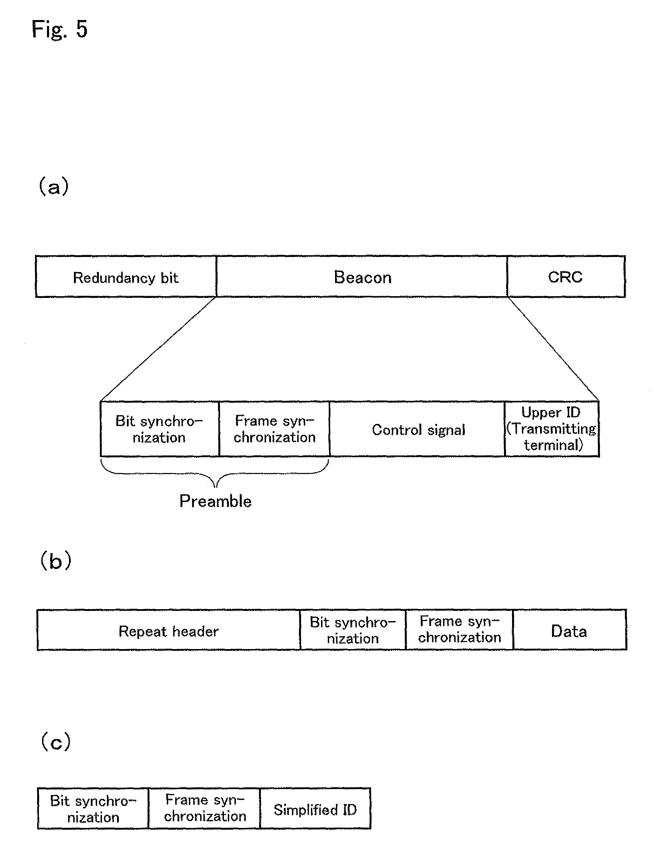

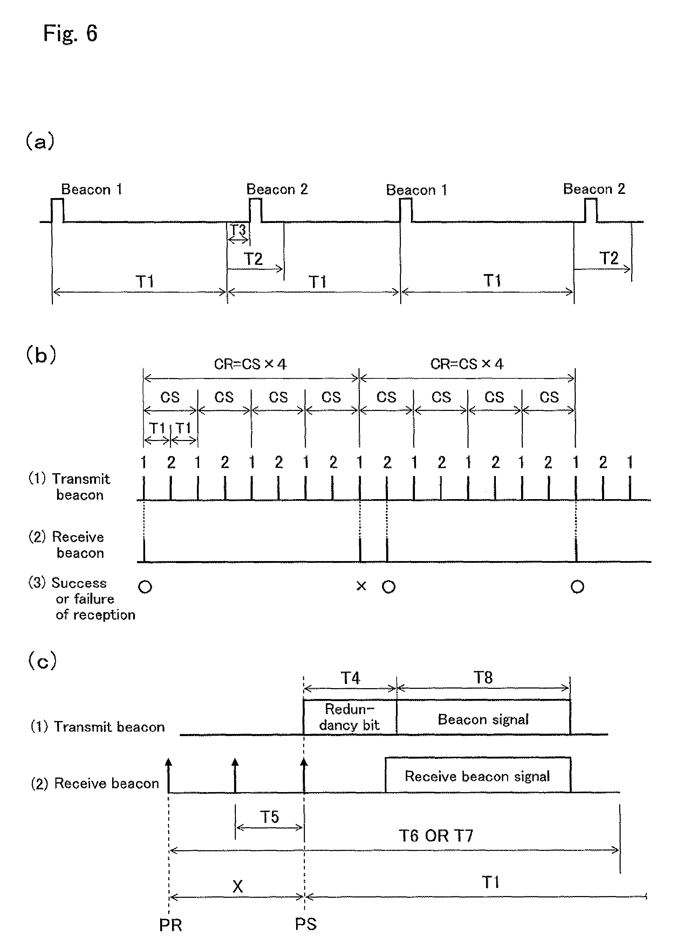

[Fig. 6] Fig. 6(a) is a time chart showing exemplary periodic transmission of the beacon signals in the beacon transmission radio communication device of Fig. 2, Fig. 6(b) is a schematic view showing the relationship between timings at which the beacon transmission radio communication device of Fig. 2 transmits the beacon signals and timings at which the beacon reception radio communication device of Fig. 3 receives the beacon signals, and Fig. 6(c) is a schematic view showing the relationship between the signal format of the beacon signal of Fig. 5(a) and a reception timing of the beacon signal.
[Fig. 7] Fig. 7 is a flowchart showing exemplary transmission control of the beacon signals performed in the beacon transmission radio communication device of Fig. 2.
[Fig. 8] Fig. 8 is a flowchart showing exemplary reception attempt control of the beacon signals performed in the beacon reception radio communication device of Fig. 3.
[Fig. 9] Fig. 9 is a schematic view showing an exemplary configuration of a radio communication system according to Embodiment 2 of the present invention.
[Fig. 10] Fig. 10 is a block diagram showing an exemplary configuration of major constituents of a beacon transmission radio communication device according to Embodiment 2 of the present invention, which is a radio communication device for use in the radio communication system of Fig. 9.
[Fig. 11] Fig. 11 is a block diagram showing an exemplary configuration of major constituents of a beacon reception radio communication device according to Embodiment 2 of the present invention, which is a radio communication device for use in the radio communication system of Fig. 9.

### Description of Embodiments

Hereinafter, preferred embodiments of the present invention will be described with reference to the drawings. Throughout the drawings, the same or corresponding components are designated by the same reference numerals and repetitive description thereof is sometimes omitted.

First of all, a description will be given of basic configurations of a radio communication device, a radio communication system, a radio communication method, and a program described in a format which is readable in a computer, of the present invention.

A radio communication device of the present invention is a radio communication device for use in a radio communication system including a plurality of radio communication devices which communicate a beacon signal between the radio communication devices, said radio communication device being configured to perform at least either transmission or reception of the beacon signal; said radio communication device comprising: a radio communication unit for performing radio communication; and a communication control unit for controlling an operation timing of the radio communication unit to communicate the beacon signal intermittently; **characterized in that**: a first beacon signal and a second beacon signal are transmitted as the beacon signal; the communication control unit controls an operation of the radio communication unit to transmit the first beacon signal in a preset timing pattern P1; and the communication control unit controls the operation of the radio communication unit to transmit the second beacon signal upon a passage of a delay time period R which is shorter than a standby time period Q which is shorter than the timing pattern P1, after the standby time period Q has passed.

The radio communication device may further preferably comprises a clock unit for periodically generating a timing pulse defining a time interval; wherein the first beacon signal and the second beacon signal are used to control for providing synchronization between an operation of the clock unit of the radio communication device and an operation of a clock unit of another radio communication device.

In the radio communication device having the above configuration, the radio communication device is configured to receive the first beacon signal and the second beacon signal; the communication control unit controls the operation of the radio communication unit to attempt to receive the first beacon signal in a preset timing pattern P2; and the communication control unit controls the operation of the radio communication unit to attempt to receive the second beacon signal according to a passage of the delay time period R which is shorter than the standby time period Q which is shorter than the timing pattern P2, after the standby time period Q has passed.

In the radio communication device having the above configuration, the communication control unit may set the timing pattern P1 or the timing pattern P2 as a cyclic pattern in which a timing of every transmission/reception is a fixed cycle, or a random pattern in which a timing of every transmission/reception is not a fixed cycle.

In the radio communication device having the above configuration, the standby time period Q may be a value preset as a predetermined length; and the delay time period R has a variable length and is set to a random value.

In the radio communication device having the above configuration, the second beacon signal may contain information indicating a length of the delay time period R.

In the radio communication device having the above configuration, when the timing pattern P1 and the timing pattern P2 are the cyclic pattern, the communication control unit may control the operation of the radio communication unit to attempt to receive the first beacon signal in a cycle which is an integer multiple of a cycle in which the first beacon signal is transmitted from the another radio communication device; and the communication control unit may control the operation of the radio communication unit to receive the second beacon signal, only when the radio communication unit has failed in reception of the first beacon signal.

In the radio communication device having the above configuration, the communication control unit may control the operation of the radio communication unit to attempt to receive the first beacon signal and the second beacon signal within a preset reception attempt upper limit time period; and the reception attempt upper limit time period may be different between a case where the radio communication unit attempts to receive the first beacon signal and a case where radio communication unit attempts to receive the second beacon signal.

The radio communication system of the present invention, may include the radio communication devices having the above configuration as communication terminals. Preferably, the radio communication device which transmits the first beacon signal and the second beacon signal may be a master radio terminal which gathers data, among the plurality of radio communication devices; and the radio communication device which receives the first beacon signal and the second beacon signal may be a slave radio terminal which obtains data to be transmitted to the master radio terminal, among the plurality of radio communication devices.

In the radio communication system, the radio communication device which receives the first beacon signal and the second beacon signal transmitted from the master radio terminal, and transmits the first beacon signal and the second beacon signal to the slave radio terminal may be a relay radio terminal which relays signals in communication between the master radio terminal and the slave radio terminal.

In the radio communication system, the slave radio terminal may include a flow rate obtaining unit for obtaining flow rate data from a flow meter for measuring a flow rate of a fluid; and the master radio terminal may include a flow rate gathering unit which receives the flow rate data from the slave radio terminal and gathers the flow rate data.

A radio communication method of the present invention is a radio communication method for use in a radio communication system including a radio communication device which transmits a beacon signal intermittently as a master radio terminal, and a radio communication device which receives the beacon signal intermittently as a slave radio terminal, said method comprising the steps of: transmitting a first beacon signal in a preset timing pattern P1 from the master radio terminal; attempting to receive the first beacon signal in a preset timing pattern P2 in the slave radio terminal; transmitting the second beacon signal from the master radio terminal, upon a passage of a delay time period R which is shorter than a standby time period Q which is shorter than the timing pattern P1, after the standby time period Q has passed; and attempting to receive in the slave radio terminal the second beacon signal according to a passage of the delay time period R which is shorter than the standby time period Q which is shorter than the timing pattern P2, after the standby time period Q has passed.

A program for executing the radio communication method of the present invention, is a program described in a format which is readable by a computer incorporated in each of radio communication devices included in a radio communication system, the radio communication devices being a radio communication device which transmits a beacon signal as a master radio terminal, and a radio communication device which receives the beacon signal as a slave radio terminal, the program being executed on the computer such that transmission or reception of the beacon signal is performed; wherein the radio communication device is configured to transmit or receive a first beacon signal and a second beacon signal intermittently, as the beacon signal; when the radio communication device is the master radio terminal, the computer executing the steps of: transmitting the first beacon signal in a preset timing pattern P1; and transmitting the second beacon signal upon a passage of a delay time period R which is shorter than a standby time period Q which is shorter than the timing pattern P1, after the standby time period Q has passed; and when the radio communication device is the slave radio terminal, the computer executing the steps of: attempting to receive the first beacon signal in a preset timing pattern P2; and attempting to receive the second beacon signal according to a passage of the delay time period R which is shorter than the standby time period Q which is shorter than the timing pattern P2, after the standby time period Q has passed.

Hereinafter, an example of embodiments of a radio (wireless) communication device, a radio communication system, a radio communication method, and a program, having the above stated configurations, will be descried in detail with reference to the drawings.

### (Embodiment 1)

The radio communication system according to Embodiment 1 of the present invention forms a short-distance radio communication network, including a master radio terminal, relay radio terminals, and slave radio terminals, as radio communication devices of the present invention. Hereinafter, the radio communication system and the radio communication device of the present embodiment will be described with reference to the drawings.

### [Configuration of Radio Communication System]

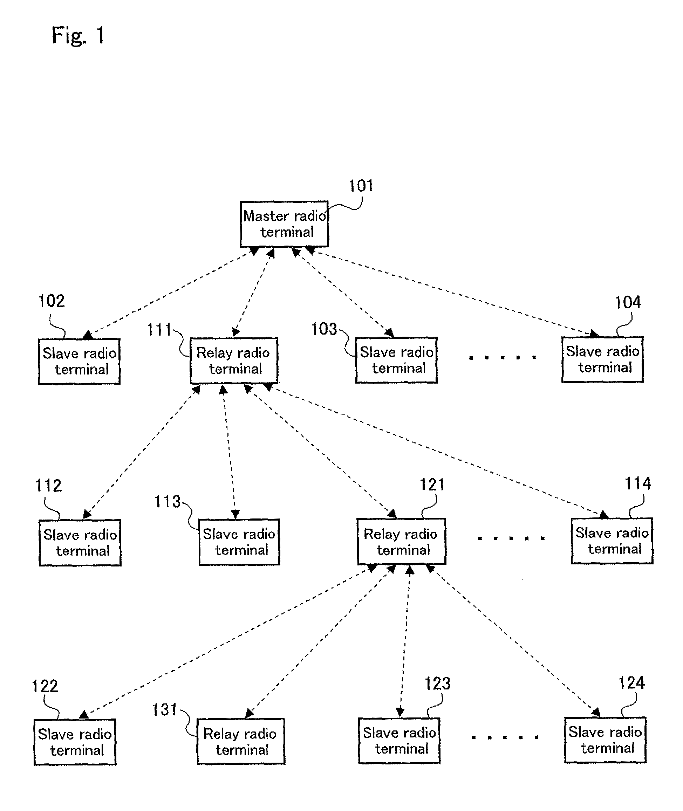

As shown in Fig. 1, the radio communication system of the present embodiment includes a master radio terminal 101, relay radio terminals 111, 121, 131 and slave radio terminals 102∼104, 112∼ 114, 122∼ 124, as the radio communication devices. Although in Fig. 1, a single master radio terminal, three relay radio terminals, and nine slave radio terminals are depicted, for easier explanation, the configuration of the radio communication system is not limited to this, but radio communication devices more than or less than those depicted may be incorporated in the system.

The master radio terminal 101 and the relay radio terminals 111, 121, 131 are radio communication devices (referred to as beacon transmission radio communication devices for the sake of convenience) which transmit beacon signals as described later. The slave radio terminals 102∼104, 112∼ 114, and 122∼ 124 are radio communication devices (referred to as beacon reception radio communication devices for the sake of convenience) which receive the beacon signals as described later. Further, the relay radio terminals 111, 121,131 are beacon reception radio communication devices. That is, the relay radio terminals 111, 121, 131 are radio communication devices which can transmit and receive the beacon signals.

The master radio terminal 101 is capable of transmitting the beacon signals to the slave radio terminals 102∼104 and to the relay radio terminal 111. Also, the master radio terminal 101 is capable of performing radio (wireless) data communication with the slave radio terminals 102∼104 and with the relay radio terminal 111. Therefore, in Fig. 1, these radio communication devices are connected to each other by bidirectional dotted-line arrows. The master radio terminal 101, the slave radio terminals 102∼104 and the relay radio terminal 111, form a first layer network in the radio communication system.

The relay radio terminal 111 is capable of transmitting the beacon signals to the slave radio terminals 112∼114 and to the relay radio terminal 121. Also, the relay radio terminal 111 is capable of performing data communication with the slave radio terminals 112∼114 and with the relay radio terminal 121. The relay radio terminal 111 is broadly defined as "slave radio terminal" from the perspective of the master radio terminal 101, but is broadly defined as "master radio terminal" from the perspective of the slave radio terminals 112 - 114, and the relay radio terminal 121. Therefore, the relay radio terminal 111, the slave radio terminals 112 ∼ 114 and the relay radio terminal 121, form a second layer network in the radio communication system.

Likewise, the relay radio terminal 121 is capable of transmitting the beacon signals to the slave radio terminals 122 ∼ 124 and to the relay radio terminal 131. Also, the relay radio terminal 121 is capable of performing data communication with the slave radio terminals 122∼124 and with the relay radio terminal 131. The relay radio terminal 121 is broadly defined as "slave radio terminal" from the perspective of the relay radio terminal 111, but is broadly defined as "master radio terminal" from the perspective of the slave radio terminals 122 - 124, and the relay radio terminal 131. Therefore, the relay radio terminal 121, the slave radio terminals 122 ∼ 124 and the relay radio terminal 131, form a third layer network in the radio communication system.

The relay radio terminal 131 is capable of transmitting the beacon signals to a plurality of slave radio terminals and relay radio terminals, or to a plurality of slave radio terminals (not shown) and is capable of performing data communication with these radio communication devices. Therefore, the relay radio terminal 131, the slave radio terminals (not shown) and the relay radio terminals (not shown), form a fourth layer network in the radio communication system. A relay radio terminal (not shown) may be broadly defined as "master radio terminal" and form a network in a fifth and following layers. If the relay radio terminal is not included in the network in the fourth layer, then the radio communication system of Fig. 1 is constructed of networks in only the first to fourth layers.

The master radio terminal 101 and the relay radio terminals 111, 121, 131 transmit the beacon signals intermittently to "slave radio terminals" (radio communication devices belonging to a network in the same layer) broadly defined with respect to the master radio terminal 101 and the relay radio terminals 111, 121, 131 broadly defined as "master radio terminals," thereby allowing the clock units in the "slave radio terminals" broadly defined to be synchronized with the clock units in the "master radio terminals" broadly defined. The "slave radio terminals" broadly defined intermittently receive the beacon signals according to the timings at which "master radio terminals" broadly defined transmit the beacon signals. Thus, calling communication at the reception timings of the beacon signals can be performed.

In the present embodiment, the master radio terminal 101, the relay radio terminals 111, 121, 131 and the slave radio terminals 102∼104, 112∼ 114, and 122∼ 124, are a master station, relay stations and slave stations in short-distance radio communication networks, respectively, and these stations are connected to information terminals such as a personal computer, a printer, a scanner, and a server.

### [Configuration of Radio Communication Device]

The above stated radio communication devices, which are the radio communication devices of the present embodiment, will be described. Next, in a large part, a configuration relating to transmission and reception of the beacon signals will be described with reference to Figs. 2 and 3.

As described above, the master radio terminal 101 and the relay radio terminals 111, 121, 131 are broadly defined as "master radio terminals." As shown in Fig. 2, each of the "master radio terminals" broadly defined is a radio communication device 30A capable of transmitting the beacon signals to the "slave radio terminal" broadly defined. The radio communication device 30A is hereinafter referred to as a beacon transmission radio communication device 30A.

As shown in Fig. 2, the beacon transmission radio communication device 30A includes as major components relating to radio (wireless) communication, a radio communication unit 31, a beacon timing control unit 32, a slot control unit 33, and a clock unit 34. The radio communication unit 31 includes an antenna 311, a transmission/reception unit 312, a beacon generating unit 313, a polling communication unit 314, and an adapter calling communication unit 315. Although not shown, the beacon transmission radio communication device 30A has various components for operating as a master station (base station) in a short-distance radio (wireless) communication network.

The radio communication unit 31 performs radio communication with the "slave radio terminal" broadly defined, and is configured to transmit the beacon signal, in particular. The antenna 311 constituting the radio communication unit 31 is not particularly limited so long as it can transmit and receive an electric wave in a specified band. In the short-distance radio communication network, as the antenna 311, a known antenna which can receive an electric wave in a band determined according to a standard such as IEEE802.15.4 is used.

The transmission/reception unit 312 is a radio frequency circuit (RF) which modulates a data signal into a signal in a specified band, or demodulates a signal in a specified band into a data signal, to transmit an electric wave from the antenna 311 into air or receive an electric wave propagating in air. Its specific configuration is not particularly limited, but a RF circuit known in the field of the short-distance radio communication network is used in the short-distance radio communication network.

The beacon generating unit 313 generates the beacon signal and outputs it to the transmission/reception unit 312. As described later, the beacon timing control unit 32 controls generation and output timing of the beacon signal. A specific configuration of the beacon generating unit 313 is not particularly limited, and a known radio communication circuit capable of generating the beacon signal is used. As described later, in the present invention, two kinds beacon signals are generated, rather than one kind of beacon signal.

The polling communication unit 314 generates a polling signal, outputs the polling signal to the transmission/reception unit 312, and obtains a signal received through the transmission/reception unit 312 from the "slave radio terminal" broadly defined, to perform polling communication with "slave radio terminal" broadly defined. A specific configuration of the polling communication unit 314 is not particularly limited, and a radio communication circuit known in the field of the polling communication is used.

The adapter calling communication unit 315 generates an adapter calling signal corresponding to "slave radio terminal" broadly defined, outputs the adapter calling signal to the transmission/reception unit 312, and obtains from the transmission/reception unit 312, a connection permission signal transmitted from the "master radio terminal" broadly defined, which has received the adapter calling signal. A specific configuration of the adapter calling communication unit 315 is not particularly limited, and a radio communication circuit known in the field of the adapter calling communication is used.

The radio communication unit 31 may have constituents other than the above described functional units. Each of the functional units may be constituted by a single circuit, but may be integrated into a single circuit board or an integrated circuit.

The beacon timing control unit 32 controls the timing at which the beacon generating unit 313 generates the beacon signal and the timing at which the beacon generating unit 313 outputs the beacon signal to the transmission/reception unit 312. Therefore, the beacon timing control unit 32 controls the timing at which the beacon signal is transmitted from the beacon transmission radio communication device 30A. Although the beacon timing control unit 32 may operate all the time, it is activated according to the timing at which the beacon signal is transmitted, under control of the slot control unit 33.

The slot control unit 33 controls generation of time slots allocated to data frames transmitted and received in the radio communication unit 31, and the timings of the time slots. Concurrently, the slot control unit 33 controls the operation of the radio communication unit 31 and the operation of the beacon timing control unit 32. As can be clearly seen from Fig. 2, the slot control unit 33 controls the operation of the beacon generating unit 313 indirectly, by controlling the operation of the beacon timing control unit 32.

The beacon timing control unit 32 and the slot control unit 33 are functional units implemented by the fact that a CPU (not shown) as processing unit included in the beacon transmission radio communication device 30A operates according to a program stored in a memory unit (not shown). The beacon timing control unit 32 and the slot control unit 33 are not limited to this, but may be configured as a known logic circuit or the like including a switching element, a subtractor, a comparator, etc..

Since the operation of the beacon timing control unit 32 is interactive with the control executed by the slot control unit 33, the beacon timing control unit 32 and the slot control unit 33 collectively constitute "communication control unit." Therefore, the beacon timing control unit 32 and the slot control unit 33 may constitute "communication control unit" as an integrated single functional unit. The configuration of the "communication control unit" is not limited to a combination of the beacon timing control unit 32 and the slot control unit 33, but may include other functional unit according to a specific configuration of the beacon transmission radio communication device 30A.

The clock unit 34 periodically generates a timing pulse defining a time interval. The slot control unit 33 operates in response to this timing pulse. In the configuration of major constituents in Fig. 2, the functional units constituting the radio communication unit 31 also operate in response to the timing pulse generated in the clock unit 34, although arrows are not shown for easier explanation. As the clock unit 34, a known clock oscillator circuit is used.

The slave radio terminals 102∼104, 112∼ 114, and 122∼ 124, and the relay radio terminals 111, 121, 131 correspond to "slave radio terminals" broadly defined. As shown in Fig. 3, each of the "slave radio terminals" broadly defined is a radio communication device 40A capable of receiving the beacon signal from the "master radio terminal" broadly defined. The radio communication device 40A is hereinafter referred to as a beacon reception radio communication device 40A.

As shown in Fig. 3, the beacon reception radio communication device 40A includes as major constituents relating to radio communication, a radio communication unit 41, a beacon timing control unit 42, a slot control unit 43, a clock unit 44, and a time synchronization unit 45. The radio communication unit 41 includes an antenna 411, a transmission/reception unit 412, a beacon reception checking unit 413, a polling communication unit 414, and an adapter calling communication unit 415. Although not shown, the beacon reception radio communication device 40A includes various constituents functioning as a slave station in the short-distance radio communication network.

The radio communication unit 41 performs radio communication with the "master radio terminal" broadly defined. In particular, the radio communication unit 41 is configured to receive the beacon signals. The radio communication unit 41 is basically configured like the radio communication unit 31. In the major constituents shown in Fig. 3, the beacon generating unit 313 included in the radio communication unit 31 replaces the beacon reception checking unit 413.

The beacon reception checking unit 413 checks whether or not the beacon signal transmitted from the "master radio terminal" broadly defined is received via the antenna 411 and the transmission/reception unit 412. To be more specific, the antenna 411 and the transmission/reception unit 412 attempt to receive the beacon signal, and if the beacon reception checking unit 413 checks that the antenna 411 and the transmission/reception unit 412 has successfully received the beacon signal, it outputs the received beacon signal to the time synchronization unit 45. Specific configuration of the beacon reception checking unit 413 is not particularly limited, but a known radio communication circuit which sorts out and checks the beacon signal, from among received signals output from the transmission/reception unit 412 is used.

The beacon reception checking unit 413 may attempt to receive the beacon signal all the time. In the present embodiment, to reduce electric power consumption, the beacon reception checking unit 413 may attempt to receive the beacon signal according to the timing at which the beacon signal is transmitted from the "master radio terminal" broadly defined. Therefore, the timing at which the beacon reception checking unit 413 attempts to receive the beacon signal is controlled by the beacon timing control unit 42.

The relay radio terminals 111, 121, 131 of Fig. 1 correspond to "master radio terminals" broadly defined, and the "slave radio terminals" broadly defined. Therefore, each of the relay radio terminals 111, 121, 131 is configured such that the radio communication unit 31 (or radio communication unit 41) includes both of the beacon generating unit 313 and the beacon reception checking unit 413. In this case, each of the beacon generating unit 313 and the beacon reception checking unit 413 may be a single radio communication circuit, but they may be integrated as a single radio communication circuit. When each of the beacon generating unit 313 and the beacon reception checking unit 413 is configured as a single functional unit, the functional unit functions as "beacon communication unit."

The time synchronization unit 45 corrects a timing pulse generated in the clock unit 44 based on the beacon signal input from the beacon reception checking unit 413. Since the beacon signal is transmitted from the "master radio terminal" broadly defined, i.e., the beacon transmission radio communication device 30A as described above, the clock unit 44 in the beacon reception radio communication device 40A corresponding to the "slave radio terminal" broadly defined, is synchronized with the clock unit 34 in the beacon transmission radio communication device 30A.

The time synchronization unit 45 is a functional unit implemented by the fact that a CPU (not shown) as processing unit included in the beacon reception radio communication device 40A operates according to a program stored in a memory unit (not shown). The time synchronization unit 45 is not limited to this, but may be configured as a known logic circuit or the like including a switching element, a subtractor, a comparator, etc..

The constituents in the radio communication unit 41, other than the beacon reception checking unit 413, are similar to those of the radio communication unit 31 as described above, and will not be described in repetition. In addition, the beacon timing control unit 42, the slot control unit 43, and the clock unit 44 are configured like the beacon timing control unit 32, the slot control unit 33, and the clock unit 34 as described above, and therefore will not be described in repetition. Although each of the relay radio terminals 111, 121, 131 includes both of the beacon generating unit 313 and the beacon reception checking unit 413, or the integrated "beacon communication unit" of the beacon generating unit 313 and the beacon reception checking unit 413, as described above, it always includes the time synchronization unit 45 for correcting the timing pulse of the clock unit 34 or the clock unit 44.

### [Operation of Radio Communication System and Radio Communication Device]

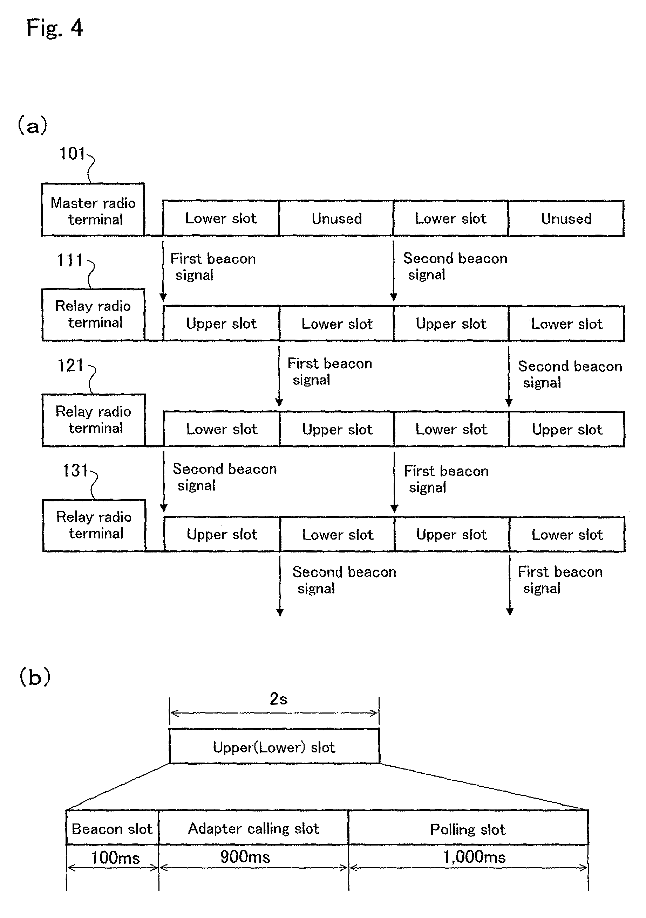

Next, a description will be given of the operation of the radio communication system of the present embodiment, and the operation of the radio communication devices 30A and 30B constituting the radio communication system, with reference to Figs. 4(a) and 4(b) and Figs. 5(a) - 5(c).

In the present embodiment, the radio communication device 30A includes the radio communication unit 31, the beacon communication unit (beacon generating unit 313), the polling communication unit 314, and the adapter calling communication unit 315, while the radio communication device 40A includes the radio communication unit 41, the beacon communication unit (beacon reception checking unit 413), the polling communication unit 414, and the adapter calling communication unit 415. Hereinafter, the operation of the radio communication will be specifically described, in the following order: beacon communication, polling communication, and adapter calling communication.

Initially, the beacon communication will be described. In the present embodiment, the radio communication device 30A is configured to transmit two kinds of beacon signals, i.e., first beacon signal and second beacon signal, from the radio communication unit 31, through different channels, respectively, while the radio communication device 40A is configured to receive two kinds of beacon signals, i.e., first beacon signal and second beacon signal, from the radio communication unit 41, through different channels, respectively. By the transmission and reception of the beacon signals, synchronization is established between the clock unit 34 in the radio communication device 30A and the clock unit 44 in the radio communication device 40A. Alternatively, the first beacon signal and the second beacon signal may be transmitted/ received through the same channel.

Of the two kinds of beacon signals, the first beacon signal is a major beacon signal, and is transmitted from the beacon transmission radio communication device 30A intermittently, for example, through a first channel. The beacon reception radio communication device 40A basically attempts to receive the first beacon signal intermittently.

In contrast, the second beacon signal is a sub-beacon signal. The second beacon signal is transmitted from the beacon transmission radio communication device 30A intermittently, for example, through a second channel different from the first channel. The beacon reception radio communication device 40A attempts to also receive the second beacon signal intermittently, to address a situation where it has failed in reception of the first beacon signal. The beacon reception radio communication device 40A may attempt to receive the second beacon signal all the time, or only when it has failed in reception of the first beacon signal.

In the beacon transmission radio communication device 30A, the beacon timing control unit 32 performs "first communication operation control" for causing the radio communication unit 31 (to be precise, beacon generating unit 313) to periodically operate to periodically transmit the major first beacon signal. In addition, the beacon timing control unit 32 performs "second communication operation control" for causing the radio communication unit 31 (beacon generating unit 313) to operate at a timing deviated from (with a difference with respect to) the operation timing of the first communication operation control, to transmit the second beacon signal randomly or at a timing delayed with respect to the cycle in which the first beacon signal is transmitted.

In the beacon reception radio communication device 40A, the beacon timing control unit 42 performs "first communication operation control" for causing the radio communication unit 41 (to be precise, beacon reception checking unit 413) to periodically operate according to the periodic transmission of the first beacon signal, to receive the first beacon signal. In addition, the beacon timing control unit 42 performs "second communication operation control" for causing the radio communication unit 41 (beacon reception checking unit 413) to operate at a timing deviated from the timing of the operation timing of the first communication operation control, to receive the second beacon signal. The beacon reception radio communication device 40A can perform terminal calling communication at a predetermined timing with respect to the beacon transmission radio communication device 30A which has transmitted the beacon signals, to correspond to the intermittent reception of the first beacon signal and the second beacon signal.

Regarding the basic operation of the radio communication device 30A and the basic operation of the radio communication device 40A, description will be given of an example in which the beacon signals are transmitted and received between the master radio terminal 101 and the relay radio terminals 111, 121, 131, shown in Fig. 1.

As shown in Fig. 4(a), in the master radio terminal 101 and the relay radio terminals 111, 121, 131, for example, one frame has four time slots. In these time slots, two kinds of slots, i.e., an upper slot and a lower slot are set alternately. The upper slot is a slot in which the corresponding radio communication device performs communication with its upper radio communication device, while the lower slot is a slot in which the corresponding radio communication device performs communication with its lower radio communication device. Since the master radio terminal 101 is an uppermost radio communication device, there is no upper slot, and therefore the corresponding slots are unused. These time slots are generated and their timings are controlled by the slot control unit 33 or the slot control unit 43.

The master radio terminal 101 in a first layer performs communication with the relay radio terminal 111 and the slave radio terminals 102∼104 in the same layer, using lower slots of the master radio terminal 101 (see Fig. 1). Because of this, the lower slots of the master radio terminal 101 are synchronized with the upper slots of the relay radio terminal 111, and with the upper slots of the slave radio terminals 102∼104, although not shown in Fig. 4(a).

The relay radio terminal 111 is "slave radio terminal" broadly defined, in the first layer, and "master radio terminal" broadly defined, in a second layer. Therefore, the relay radio terminal 111 performs communication with the relay radio terminal 121 and the slave radio terminals 112∼114, using the lower slots of the relay radio terminal 111 (see Fig. 1). Therefore, the lower slots of the relay radio terminal 111 are synchronized with the upper slots of the relay radio terminal 121 and with the upper slots of the slave radio terminals 112∼114 (not shown).

The lower slots and the upper slots are synchronized between the relay radio terminal 121 and the relay radio terminal 131 in the same manner, which will not be described in repetition.

As shown in Fig. 4(b), each of the upper slot and the lower slot is composed of a beacon slot, an adapter calling slot and a polling slot. These slots are generated and their timings are controlled by the slot control unit 33 or the slot control unit 43.

In the format of Fig. 4(b), the slot length of one upper slot or one lower slot is, for example, 2 (seconds) (2s), the slot length of the beacon slot is, for example, 100 (milliseconds) (100ms), the slot length of the adapter calling slot is, for example, 900 (milliseconds) (900ms), and the slot length of the polling slot is, for example, 1,000 (milliseconds) (1, 000ms). The first beacon signal and the second beacon signal are transmitted in the beacon slots of the lower slots, and are received in the beacon slots of the upper slots.

The transmission (and reception) of the first beacon signal and the second beacon signal in the beacon slots comply with the first communication operation control and the second communication operation control. That is, since the first beacon signal is transmitted at a head of the beacon slot, it is transmitted periodically at a timing which is the head of the lower slot (first communication operation control). In contrast, the second beacon signal is transmitted at, for example, a random timing, within 100 (milliseconds) which is the slot length of the beacon slot. Since the beacon signal is transmitted once per lower slot, the first beacon signal and the second beacon signal are transmitted alternately. Therefore, the second beacon signal is transmitted at a timing deviated from the transmission timing of the first beacon signal (second communication operation control).

A description will be specifically given of the timing at which the first beacon signal is transmitted and the timing at which the second beacon signal is transmitted. As shown in Fig. 4(a), for example, when the master radio terminal 101 in the first layer transmits the first beacon signal in a lower slot, the relay radio terminal 111 in the second layer receives the first beacon signal in an upper slot. In the relay radio terminal 111, the time synchronization unit 45 causes the clock unit 44 of itself to be synchronized with the clock unit 34 in the master radio terminal 101, and the slot control unit 43 corrects the timing of the time slot.

Then, when the relay radio terminal 111 in the second layer transmits the first beacon signal in a subsequent lower slot to the relay radio terminal 121 in a third layer, the relay radio terminal 121 receives the first beacon signal in an upper slot, and performs synchronization of the clock unit 44 and correction of the timing. Then, the relay radio terminal 121 transmits the first beacon signal to the relay radio terminal 131 in a lower layer (fourth layer).

If the relay radio terminal 111 in the second layer has failed in reception of the first beacon signal, the master radio terminal 101 transmits the second beacon signal in a subsequent lower slot. Since the second beacon signal is transmitted at a random timing within a period of the beacon slot, the relay radio terminal 111 receives the second beacon signal according to the random timing within a period of the beacon slot of the corresponding upper slot. The transmission and reception of the second beacon signal is also performed between the relay radio terminals 111 and 121, or between the relay radio terminals 121 and 131.

Subsequently, the polling communication will be described. The master radio terminal 101 causes the polling communication unit 314 to initiate transmission of the polling signal at a head of a polling slot of a lower slot, Each of the relay radio terminal 111 and the slave radio terminals 102∼ 104 causes the polling communication unit 414 to attempt to receive the polling signal intermittently according to the timing at which the polling signal is transmitted, at a head of a polling slot in an upper slot, to receive the polling signal transmitted from the master radio terminal 101. The polling communication unit 414 halts reception of the polling signal promptly when it determines that the polling signal is not transmitted. Receiving the polling signal, the relay radio terminal 111 initiates transmission of the polling signal at a head of a polling slot in a lower slot. Likewise, the relay radio terminals 121, 131 perform the polling communication.

Subsequently, the adapter calling communication will be described. For example, when a request for calling communication occurs in any one of the slave radio terminals 102 - 104 in the first layer, and it wishes to transmit an adapter calling signal to the master radio terminal 101, the adapter calling communication unit 415 initiates transmission of the adapter calling signal at a head of an adapter calling slot in a lower slot. The master radio terminal 101 causes the adapter calling communication unit 315 to attempt to receive the adapter calling signal intermittently according to the timing at which the adapter calling signal is transmitted, at a head of an adapter calling slot in a lower slot, to receive the adapter calling signal from any one of the slave radio terminals 102 ∼104. If the adapter calling communication unit 315 determines that the adapter calling signal is not transmitted, it halts reception promptly.

For example, when a request for calling communication occurs in any one of the slave radio terminals 112 ∼ 114 in the second layer, adapter calling communication with the relay radio terminal 111 occurs like the above case. Furthermore, the relay radio terminal 111 causes the adapter calling communication unit 315 to transmit the adapter calling signal received from any one of the slave radio terminals 112 ∼ 114 to the master radio terminal 101 at a head of an adapter calling slot of an upper slot. Likewise, when a request for calling communication occurs in any one of of the slave radio terminals 122 - 124 in the third layer, or in the slave radio terminals in the fourth or following layer, data is transmitted to the master radio terminal 101 via the relay radio terminals 111, 121, 131.

A description will now be given of the format of the signal for use in the beacon communication, the format of the signal for use in the polling communication and the format of the signal for use in the adapter calling communication. As shown in Fig. 5(a), a redundancy bit signal exists before the beacon signal, and a CRC signal exists after the beacon signal. The redundancy bit signal is composed of repetition of "1010.....". The CRC signal is a cycle redundancy check signal. The beacon signal is composed of a bit synchronization signal, a frame synchronization signal, a control signal, and an identifying code of an upper (transmitting terminal). The bit synchronization signal is composed of repetition of "1010....." The frame synchronization signal is a signal with which the head of the data can be identified. The control signal is a signal for providing synchronization of the clock unit 44. The identifying code is hereinafter referred to as ID. The bit synchronization signal and the frame synchronization signal are a preamble.

Each of the polling signal and the adapter calling signal is, as shown in Fig. 5(b), composed of a repeat header, a bit synchronization signal, a frame synchronization signal, and data. The data contains a control signal, ID of the upper or lower terminal (transmitting terminal or transmission destination), etc. The repeat header is, as shown in Fig. 5(c), composed of repetition of one set of a bit synchronization signal, a frame synchronization signal, and a simplified ID, which occurs plural times. The simplified ID is a simplified and abbreviated form of the standard ID. For example, the standard ID is 48 bits, and the simplified ID is 8 bits left by taking lower 1byte from the standard ID.

The repeat header is used to properly detect a carrier between "master radio terminal" broadly defined and "slave radio terminal" broadly defined.

That is, the slave radio terminals 102∼104, 112∼114, 122∼124 receive the first beacon signal once in every plural times, instead of reception of the first beacon signals transmitted every time. Since the reception of the first beacon signal is intended to provide synchronization of the clock unit 44, the reception need not occur so frequently. For example, assuming that a transmission cycle of the first beacon signal is 8 (seconds), and the first beacon signal is received once in every 100 times of transmission of the first beacon signal, the first beacon signal is received once in every 800 (seconds) (this will be described). In contrast, for example, the polling signal is received in an intermittent reception cycle which is as short as possible to achieve real-time communication. Therefore, the polling signal is received in a four (second) cycle which is a timing which occurs at every upper slot.

As an electric power supply for the slave radio terminals 102∼104, 112∼114, 122∼124, a battery is sometimes used instead of an AC electric power supply. In this case, it is important to suppress electric power consumption. In this case, it is desirable to detect a carrier in reception which occurs in four (second) cycles and to halt reception promptly if no carrier is detected. However, if there is an error between the clock unit 34 and the clock unit 44 among the master radio terminal 101 and the upper relay radio terminals 111, 121, 131, there is a deviation between the timing at which the carrier is detected and the timing at which the polling signal is transmitted. Such a deviation in the timing leads to a situation where the carrier detection is unfeasible, and communication fails. The repeat header is intended to avert such a situation.

The cycle in which the beacon signal is received to provide synchronization of the clock unit 44 is, for example, 800 (seconds) as described above, while the length of the repeat header is set longer than a maximum clock error (described later) in 800 (seconds). A reception timing is set so that the carrier is detected in the middle of the repeat header, in a state where there is no clock error. With this setting, the carrier detection can be accomplished in any portion of the repeat header even if the maximum clock error occurs. Because of this, it can be roughly determined whether or not a signal is a signal to be received, based on the simplified ID.

As the electric power supply for the master radio terminal 101 and the relay radio terminals 111, 121, 131, the AC electric power supply is generally used.
Therefore, consideration need not be given to electric power consumption. Nonetheless, like the above case, they are preferably configured such that the carrier is detected in the repeat header.

### [Synchronization of Clock Unit in Transmission and Reception of Beacon Signal]

Next, a description will be given of the synchronization of the clock unit 44 in the transmission and reception of the first beacon signal and the second beacon signal, with reference to Figs. 6(a), 6(b), Fig. 7, and Fig. 8.

As shown in Fig. 6(a), the beacon transmission radio communication device 30A, for example, the master radio terminal 101 transmits the first beacon signal and the second beacon signal alternately every T1 (seconds). The time period T1 is referred to as "beacon transmission interval time period." The first beacon signal is transmitted promptly at a timing which is once in every 2 × T1 (seconds) which is twice as long as the beacon transmission interval time period.

In contrast, the second beacon signal is transmitted after T3 (seconds) as a random time period has passed with respect to a timing after T1 (seconds) has passed from the timing at which a most recent first beacon signal has been transmitted. That is, since the second beacon signal is transmitted after a passage of a delay of T3 (seconds) after the beacon transmission interval time period has passed, this time period T3 is referred to as "random delay time period." Since a maximum value (upper limit value) T2 (seconds) is set as the random delay time period, this time T2 is referred to as "maximum delay time period."

When a comparison is made among the beacon transmission interval time period T1, the maximum delay time period T2 and the random delay time period T3, T3 < T2 < T1 is established. Examples are T1 =4 (seconds), T2 = 100 (milliseconds), and T3 = 10 (milliseconds) × n (n is any one of integers of 0 ∼ 9 and is selected randomly).
The transmission time period (duration of the beacon signal) of the first beacon signal and the second beacon signal is set to 10 (milliseconds) or less.

The beacon reception radio communication device 40A, for example, the relay radio terminal 111 and the slave radio terminals 102∼104 in the first layer receive the first beacon signal and the second beacon signal. Since the timings at which the first beacon signal and the second beacon signal are transmitted are not clear in an initial stage, the beacon reception radio communication device 40A continues the reception operation of the beacon signal for the beacon transmission interval time period T1 or more. The reception operation performed by the radio communication unit 41 to receive the beacon signals is referred to as "attempt to receive the beacon signal." By continuing the attempt to receive the beacon signal, for T1 (seconds) or longer, the first beacon signal or the second beacon signal is received without fail.

If the reception operation continues for T1 (seconds) or longer, there may be a chance that the relay radio terminal 111 and the slave radio terminals 102∼104 in the first layer may receive the beacon signal from the relay radio terminal 121 or 131 which is the beacon transmission radio communication device 30A in a layer other than the first layer. If the beacon reception radio communication device 40A receives a plurality of beacon signals, it selects a beacon signal from the radio communication device 30A, the beacon signal having a level which is not lower than a predetermined level, the radio communication device 30A being smallest in the number of relay stages, and uses the selected beacon signal to provide synchronization of the clock unit 44. For example, in the configuration of the radio communication system shown in Fig. 1, the number of relay stages decreases in the order of the relay radio terminal 131, the relay radio terminal 121, the relay radio terminal 111, and the master radio terminal 101 (the number of relay stages of the master radio terminal 101 is 0, which is smallest number).

The beacon reception radio communication device 40A is required to receive the second beacon signal with a greatest effort, if it fails in reception of the first beacon signal. Since the second beacon signal is transmitted at a random transmission timing, it is desired that the beacon reception radio communication device 40A set a time period required to attempt to receive the second beacon signal (reception standby time period) relatively longer. Nonetheless, electric power consumption increases if the reception standby time period increases. To solve this, a generation pattern of the random delay time period T3 of transmission of the second beacon signal may be shared by the beacon transmission radio communication device 30A and the beacon reception radio communication device 40A.

A description will be given of a case where the random delay time period T3 = 10 (milliseconds) × n (n is any one of integers of 0 ∼ 9 and is selected randomly) as mentioned above, for example. The value of "n" of the transmission timing of the second beacon signal is shared by the beacon transmission radio communication device 30A and the beacon reception radio communication device 40A. For example, the beacon generating unit 313 in a particular master radio terminal 101 sets variable data of n such that n changes in the following order: 3, 7, 1,5,8,2,0,9,4, every time the second beacon signal is transmitted.

In the above example, at a first transmission timing, n= 3, and therefore the random delay time period T3 = 30 (milliseconds). Also, at a second transmission timing, n= 7, and therefore the random delay time period T3 = 70 (milliseconds). Also, at a third transmission timing, n= 1, and therefore the random delay time period T3 = 10 (milliseconds) (The following will be omitted).

The variable data of n is also shared by the beacon reception checking units 413 in the "slave radio terminals" broadly defined (slave radio terminals 102∼ 104 and the relay radio terminal 111) in the same layer as that of the master radio terminal 101. Because of this, the beacon reception radio communication device 40A can predict the length of the random delay time period T3 of the second beacon signal transmitted, and therefore can set the reception standby time period as short as possible, thereby making it possible to suppress electric power consumption.

Note that in the radio communication system, the variable data of n may be set different between the beacon transmission radio communication devices 30A. Instead of using the random delay time period T3, the second beacon signal may be transmitted after the beacon transmission radio communication device 30A stands by for a preset time period. An example of the preset time period is a value relating to a terminal number, etc..

The beacon reception radio communication device 40A may attempt to receive the beacon signal every time the first beacon signal or the second beacon signal is transmitted from the beacon transmission radio communication device 30A. However, for example, the beacon reception radio communication device 40A preferably attempts to receive the beacon signal in cycles of an integer multiple of the cycle (2 × T1) in which the first beacon signal is transmitted. This is because, the transmission and reception of the beacon signal is intended to provide synchronization of the clock unit 44, and therefore it is not necessary to attempt to receive the beacon signal frequently.

Hereinafter, the cycle in which the first beacon signal is transmitted is referred to as "beacon transmission cycle," and the cycle in which the first beacon signal is received is referred to as "beacon reception cycle." When an algebra of the beacon transmission cycle is CS (seconds), and an algebra of the beacon reception cycle is CR (seconds), it is preferable that the beacon transmission cycle CS = 2 × T1 and the beacon reception cycle CR = CS × N (N: positive integer of 2 or larger). Of course, CR = CS (N = 1) (N: positive integer of 1 or larger).

The beacon reception cycle of the beacon reception radio communication device 40A will be described. For example, as shown in "(1) transmit beacon" in Fig. 6(b), the beacon transmission radio communication device 30A transmit the first beacon signal and the second beacon signal (in Fig. 6(b), "1" indicates the first beacon signal and "2" indicates the second beacon signal"), alternately, once in every beacon transmission interval time period T1 (seconds). In this case, the first beacon signal is transmitted in the beacon transmission cycle CS = 2 × T1 (seconds). The beacon reception radio communication device 40A attempts to receive the first beacon signal in the beacon reception cycle of CR=CS × N (seconds). In the example of "(2) receive beacon" in Fig. 6(b), the beacon reception cycle is four (N= 4) times as long as the beacon transmission cycle CS = 2 × T1 (seconds). Therefore, the beacon reception radio communication device 40A attempts to receive the first beacon signal intermittently, in the cycles of CR = 4 × (2 × T1) (seconds).

As shown in "(3) success or failure of reception" in Fig. 6(b), for example, in a case where the beacon reception radio communication device 40A successfully receives the first beacon signal in a first attempt to receive the first beacon signal (this is expressed as " ○O " in Fig. 6(b)), it attempts to receive the first beacon signal at a reception timing of the beacon reception cycle CR = 4 × CS. In this case, if the beacon reception radio communication device 40A has failed in reception of the first beacon signal (this is expressed as " × " in Fig. 6(b)), it receives the second beacon signal at the reception timing of the second beacon signal just after the failure. As shown in Fig. 6(a), the reception timing of the second beacon signal occurs after a delay of the random delay time period T3 (seconds) passes.

For the beacon reception radio communication device 40A, the length of the random delay time period T3 must be clarified to synchronize the reception attempt timing (beacon reception cycle CR) of the first beacon signal with the transmission timing (beacon transmission cycle CS) of the first beacon signal (i.e., to provide synchronization of the clock unit 44). In other words, if the length of the random delay time period T3 is not clarified, then a base point of the beacon transmission cycle CS and the beacon reception cycle CR based on the beacon transmission interval time period T1 cannot be established. To this end, the beacon transmission radio communication devices 30A transmits the second beacon signal after data indicating the length of the random delay time period T3 is inserted in a signal format of the second beacon signal.

Receiving the second beacon signal, in the beacon reception radio communication device 40A, the time synchronization unit 45 obtains the data indicating the length of the random delay time period T3 contained in the second beacon signal received, and corrects the timing pulse of the clock unit 44 by T3 (seconds). This allows the clock unit 44 to be synchronized with the clock unit 34 in the beacon transmission radio communication device 30A. In this way, the start point of the beacon transmission interval time period T 1 which is the basis of the transmission cycle of the first beacon signal can be established. Then, the beacon timing control unit 42 in the beacon reception radio communication device 40A causes the beacon reception checking unit 413 to attempt to receive the beacon signal intermittently, in the beacon reception cycle CR, according to the transmission timing (beacon transmission cycle CS) of the first beacon signal. In the above described manner, even if the beacon reception radio communication device 40A fails in reception of the first beacon signal in the beacon reception cycle and receives the second beacon signal, it can successively receive the first beacon signal thereafter.

Depending on the situation, a plurality of radio communication systems may be installed in areas which are close to each other, or areas overlapping with each other. However, there is a possibility that the radio communication devices in the respective radio communication systems are not always synchronized with each other, and the beacon signals transmitted and received in the radio communication systems are out of synchronization (unsynchronized). Under this situation, if the master radio terminals 101 in the respective radio communication systems are located close to each other, the master radio terminals 101 may transmit beacon signals in which beacon transmission cycles CS are deviated from each other, to all "slave radio terminals".

The beacon transmission interval time period T1 is, for example 4 (seconds). For example, if the length of the beacon signal itself (transmission time period of the beacon signal) is, for example, 10(milliseconds), a duty ratio in the transmission of the beacon signal is 1/400. Therefore, even if the beacon signals transmitted from the respective radio communication systems are out of synchronization, a probability that they will collide with each other is low. However, the beacon transmission interval time periods T1 set in the respective radio communication systems contain some clock error (described later), a deviation of the beacon transmission timing from proper one gradually progresses over long-term transmission/reception of the beacon signal and due to clock errors in the beacon transmission cycles in the respective radio communication systems. This could result in a match between the beacon transmission cycles CS.

Once the beacon transmission cycles CS match, a long time period passes until the beacon transmission cycles are deviated from each other due to their clock errors. In that case, the first beacon signals continue to be colliding with each other for a long period of time. Therefore, the beacon reception radio communication device 40A in each radio communication system cannot receive the first beacon signal. In contrast, since the second beacon signal is transmitted at a timing which is delayed for the random delay period T3 with respect to the beacon transmission interval time period T1 which is the basis of the beacon transmission cycle CS, the transmission timing of the second beacon signal is always deviated from the transmission timing of the first beacon signal.

Of course, there is a possibility that the second beacon signals will collide with each other. However, the length of the random delay time period T3 is set independently for each radio communication system, and is determined as a random number such that its upper limit is the maximum delay time period T2. Therefore, even if the random delay time periods T3 of two radio communication systems match, and thereby the second beacon signals collide with each other once, a probability that the random delay time periods T3 will match in a next transmission timing is very low. For these reasons, a probability that the second beacon signals will collide with each other is fundamentally low, and a probability that they collide with each other in succession is lower.

Therefore, if the transmission timings (beacon transmission cycles CS) of the first beacon signals in a plurality of radio communication systems match and a state where the first beacon signals collide with each other and cannot be received continues, there is a low possibility that the second beacon signals collide with each other plural times in succession. This allows the beacon reception radio communication device 40A in each radio communication system to provide synchronization of the clock unit 44 based on the second beacon signal received.

The outline of the above described transmission and reception of the first beacon signal and the second beacon signal will be discussed. In the beacon transmission radio communication device 30A, the slot control unit 33 (and beacon timing control unit 32) controls the operation of the radio communication unit 31 in such a manner that it transmits the first beacon signal in a preset cycle P1 (i.e., beacon transmission cycle CS = 2 × T1), and transmits the second beacon signal upon a passage of a delay time period R (random delay time period T3) which is shorter than a standby time period Q (1/2 of beacon transmission cycle CS = beacon transmission interval time period T1) which is shorter than the cycle P1, after the standby time period Q has passed.

In the beacon reception radio communication device 40A, the slot control unit 43 (and beacon timing control unit 42) controls the operation of the radio communication unit 41 in such a manner that it attempts to receive the first beacon signal in a cycle P2 (beacon reception cycle CR) and attempts to receive the second beacon signal upon a passage of the delay time period R (random delay time period T3) which is shorter than the standby time period Q (beacon transmission interval time period T1) which is shorter than the cycle P2, after the standby time period Q has passed.

Note that a relation may be set such that the cycle P1 =cycle P2 = beacon transmission cycle CS. As described above, cycle P2 = beacon reception cycle CR is more preferable to suppress electric power consumption in the beacon reception radio communication device 40A. Furthermore, the standby time period Q need not be equal to the beacon transmission interval time period T1. The standby time period Q may be longer than or shorter than the beacon transmission interval time period T1, so long as the second beacon signal can be transmitted and received randomly or at a timing delayed with respect to the transmission timing (timing of cycle P1 or cycle P2) of the transmission and reception of the first beacon signal.

The delay time period R may be the random delay time period T3 which is not longer than the maximum delay time period T2, but may be a predetermined length rather than a random length. For example, as the delay time period R, time periods T31, T32, T33 are preset, and the preset time periods T31 - T33 may be changed periodically. In such a configuration, the second beacon signal can be transmitted and received at a timing delayed with respect to the transmission timing (timing of cycle P1 or cycle P2) of the transmission and reception of the first beacon signal. In addition, for example, even in a case where a plurality of radio communication systems are installed in areas close to each other or overlapping areas, it is possible to avert continuous collision of the second beacon signals.

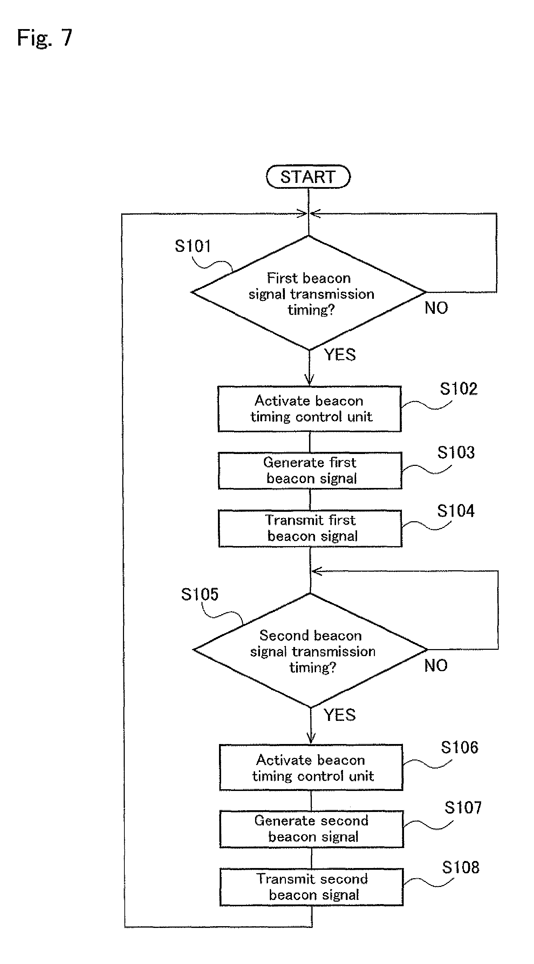

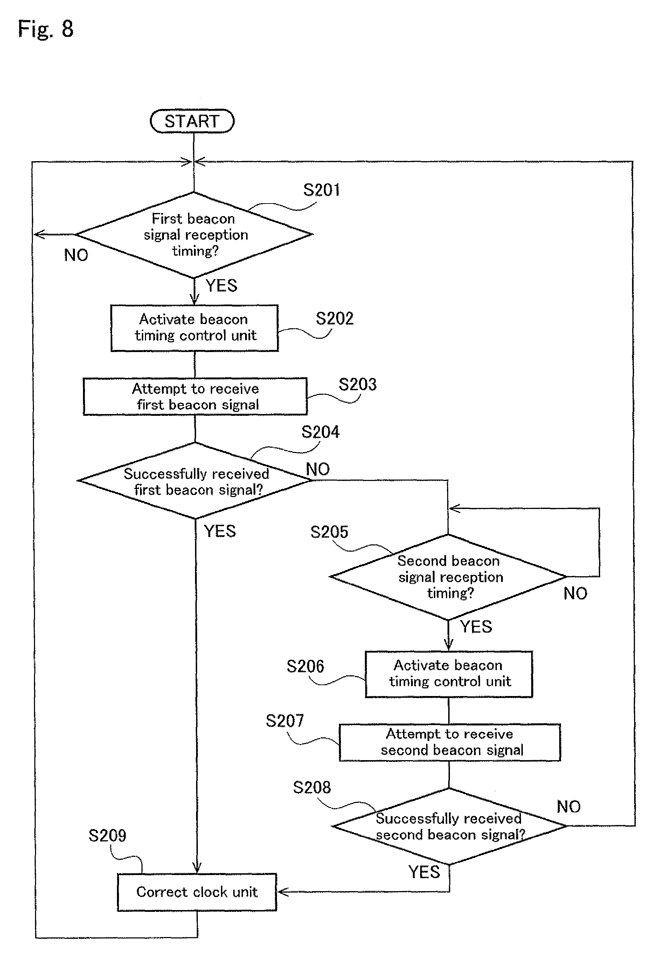

When the method of providing synchronization of the clock unit by the transmission and reception of the beacon signal is seen as a control method or a radio communication method performed by the slot control unit 33 (communication control unit) in the beacon transmission radio communication device 30A, and the slot control unit 43 (communication control unit) in the beacon reception radio communication device 40A, it is expressed as a control flow shown in Figs. 7 and 8.

Referring to Fig. 7, in the beacon transmission radio communication device 30A, when a power is ON, the slot control unit 33 initiates communication control as follows. The slot control unit 33 determines whether or not the transmission timing (beacon transmission cycle CS) of the first beacon signal has been reached based on the timing pulse of the clock unit 34 (step S101). If it is determined that the transmission timing has not been reached yet (NO in step S101), the slot control unit 33 repeats the determination until the transmission timing has been reached. If it is determined that the transmission timing has been reached (YES in step S101), the beacon timing control unit 32 is activated (step 8102). The beacon timing control unit 32 causes the beacon generating unit 313 to generate the first beacon signal (step S103), and causes the transmission/reception unit 312 and the antenna 311 to transmit the first beacon signal (step S104).

Then, the slot control unit 33 determines whether or not the transmission timing of the second beacon signal has been reached (step S105). If it is determined that the transmission timing has not been reached yet (NO in step S105), the slot control unit 33 repeats the determination until the transmission timing has been reached. If it is determined that the transmission timing has been reached (YES in step S105), the beacon timing control unit 32 is activated (step S106). The beacon timing control unit 32 causes the beacon generating unit 313 to generate the second beacon signal (step S107), and causes the transmission/reception unit 312 and the antenna 311 to transmit the second beacon signal (step S108). After that, the slot control unit 33 returns to the determination as to the transmission timing of the first beacon signal (step S101). This control is repeated until the power of the beacon transmission radio communication device 30A is cut off

Referring to Fig. 8, in the beacon reception radio communication device 40A, when a power is ON, the slot control unit 43 initiates communication control as follows. The slot control unit 43 determines whether or not the reception timing (beacon reception cycle CR) of the first beacon signal has been reached based on the timing pulse of the clock unit 34 (step S201). If it is determined that the reception timing has not been reached yet (NO in step S201), the slot control unit 43 repeats the determination until the reception timing has been reached. If it is determined that the reception timing has been reached (YES in step S201), the beacon timing control unit 42 is activated (step S202). The beacon timing control unit 42 causes the beacon reception checking unit 413 to attempt to receive the first beacon signal (step S203).

Then, the beacon timing control unit 42 causes the beacon reception checking unit 413 to determine whether or the first beacon signal has been successfully received (step S204). If it is determined that the first beacon signal has been successfully received (YES in step S204), the beacon timing control unit 42 causes the time synchronization unit 45 to correct the timing pulse of the clock unit 44 (step S209). This allows the clock unit 44 to be synchronized with the clock unit 34 in the beacon transmission radio communication device 30A.

On the other hand, if it is determined that the second beacon signal has not been successfully received (NO in step S204), the slot control unit 43 determines whether or not the reception timing of the second beacon signal has been reached based on the timing pulse of the clock unit 44 (step S205). If it is determined that the reception timing has not been reached yet (NO in step S205), the slot control unit 43 repeats the determination until the reception timing has been reached. If it is determined that the reception timing has been reached (YES in step S205), the beacon timing control unit 42 is activated (step S206). The beacon timing control unit 42 causes the beacon reception checking unit 413 to attempt to receive the second beacon signal (step S207).

If the beacon reception checking unit 413 has failed in reception of the second beacon signal (NO in step S208), the throttle control unit 43 returns to the determination of the reception timing of the first beacon signal (step S201). On the other hand, if the beacon reception checking unit 413 has successfully received the second beacon signal (YES in step S208), the beacon timing control unit 42 causes the time synchronization unit 45 to correct the timing pulse of the clock unit 44 (step S209). This allows the clock unit 44 to be synchronized with the clock unit 34 in the beacon transmission radio communication device 30A. After that, the slot control unit 43 returns to the determination as to the reception timing of the first beacon signal (step S201). This control is repeated until the power of the beacon reception radio communication device 40A is cut off.

The radio communication method having the above configuration can be provided as a program descried in a format readable by a computer such that the program is executed on a processing unit (microcomputer, etc.) in the radio communication device 30A and a processing (microcomputer) unit in the radio communication device 40A, in the radio communication system including the beacon transmission radio communication device 30A and the beacon reception radio communication device 40A.

As described above, even if the beacon reception radio communication device 40A has failed in reception of the first beacon signal for some reason or another (e.g., an unsynchronized radio communication system is present in the vicinity of the master radio terminal 101 and the beacon transmission cycles match accidentally), the beacon reception radio communication device 40A can receive the second beacon signal. This allows establishment of synchronization between the clock unit 44 in the beacon reception radio communication device 40A and the clock unit 34 in the beacon transmission radio communication device 30A. So long as the beacon reception radio communication device 40A can receive the first beacon signal properly, the clock unit 34 and the clock unit 44 can be synchronized with each other by receiving the first beacon signal transmitted in the beacon transmission cycle CS (2 × T1), intermittently in the beacon reception cycle CR. This makes it possible to reduce a start-up time of the beacon reception radio communication device 40A and suppress electric power consumption in the beacon reception radio communication device 40A. That is, in accordance with the present embodiment, a disturbance of the beacon signal can be effectively addressed, and electric power consumption can be suppressed.

### [Upper Limit Time of Attempt to Receive Beacon Signal]

In particular, the beacon reception radio communication device 40A is configured to initiate attempt to receive the first beacon signal and the second beacon signal in light of a clock error. This will be specifically described with reference to Fig. 6(c),

Firstly, the clock error will be discussed. A clock unit incorporated in a general radio communication device is configured to oscillate a quarts oscillating signal using a quarts oscillator as a reference oscillating source. An error (frequency error) generated in a frequency of the quarts oscillating signal is ± 100ppm at maximum in view of a temperature change, etc..

In the radio communication system, the beacon transmission radio communication device 30A includes the clock unit 34 independently and the beacon reception radio communication device 40A includes the clock unit 44 independently. Assuming that the frequency error in the clock unit 34 is ± 100ppm at maximum and the frequency error in the clock unit 44 is ± 100ppm at maximum, a relative frequency error generated between the clock unit 34 and the clock unit 44 is ± 200ppm at maximum. The relative frequency error generated between the clock unit 34 and the clock unit 44 is referred to as "clock error" in the present specification.

As described above, even when the beacon reception radio communication device 40A has successfully received the first beacon signal transmitted from the beacon transmission radio communication device 30A, and the clock unit 44 has been successfully synchronized with the clock unit 34, a non-negligible clock error is generated between the clock unit 44 and the clock unit 34 in a time period until the first beacon signal is received next.

For example, when the beacon transmission interval time period T1 = 4 (seconds) as described above, the beacon transmission radio communication device 30A transmits the first beacon signal once in every beacon transmission cycle CS = 2×T1 = 8 (seconds), while the beacon reception radio communication device 40A attempts to receive the first beacon signal once in every beacon reception cycle CR = 4 (2 × T1) = 8 × T1 = 32 (seconds) (see Fig. 6(b)). Therefore, in a period of the beacon reception cycle CR = 32 (seconds), the clock error generated between the clock unit 34 and the clock unit 44 is ±200ppm × 32(seconds) = ± 6.4 (milliseconds) at maximum. As described above, since the length (duration) of the beacon signal (transmission time period) is not longer than 10 (milliseconds), this clock error adversely affects the reception of the beacon signal.

As a solution to the above, in the present embodiment, to avert a failure in the reception of the beacon signal due to the clock error, a reception attempt upper limit time period (or reception time-out time period) T6 or T7 is preset as shown in Fig. 6(c), for the attempt to receive the beacon signal by the beacon reception checking unit 413. The reception attempt upper limit time period T6 is set to receive the first beacon signal transmitted in the beacon transmission cycle CS = 2×T1, while the reception attempt upper limit time period T7 is set to receive the second beacon signal transmitted after the random delay time period T3 has passed (standby time period has passed) after the beacon transmission cycle CS has passed.

To be specific, as shown in "(1) transmit beacon" in Fig. 6(c), a redundancy bit signal is present prior to each of the first beacon signal and the second beacon signal (also see Fig. 5(a)). Therefore, as shown in "(2) receive beacon" in Fig. 6(c), the reception attempt upper limit time period T6 or T7 is set to a length which is not less than the length (duration) of the beacon signal including the redundancy signal. Note that the time period of the reception operation of the beacon signal is a little longer than the length of the beacon signal, as shown in "(2) receive beacon" in Fig. 6(c).

A start point PS of the transmission timing of the beacon signal should coincide with a start point PR of the reception timing of the beacon signal, in normal cases. However, if there is a clock error, the start point PS and the start point PR are deviated from each other significantly. For example, as shown in "(2) receive beacon" in Fig. 6(c), when an algebra of the maximum clock error is X (seconds), the start point PR of the transmission timing is shifted X (seconds) at maximum before the start point PS of the reception timing.

That is, the maximum clock error X changes according to the beacon reception cycle CR in the beacon reception radio communication device 40A. Since the beacon reception cycle CR = CS × N (N: positive integer which is not less than 1), the maximum clock error X = (2 × T1) × N × 200ppm. Considering the beacon reception cycle CR, the beacon reception radio communication device 40A may initiate attempt to receive the first beacon signal at a timing which is X (seconds) earlier than the start-point PS of the transmission timing of the first beacon signal. Therefore, the reception attempt upper limit time period T6 or T7 is set to be substantially equal to a length of a sum of the length (duration) of redundancy signal, the length (duration) of the beacon signal, and the maximum clock error X.

In the schematic view shown in Fig. 6(c), the redundancy bit signal and the beacon signal are depicted as being magnified, and do not indicate their actual time lengths correctly. As described above, in the case of example of the beacon transmission interval time period T1 = 4 (seconds), the length (duration) (transmission time period) of the beacon signal is set to 10 (milliseconds) or less, but the maximum clock error X may possibly become 6.4 (milliseconds). Therefore, the upper limit length of the reception attempt upper limit time period T6 or T7 may be twice as long as the maximum clock error X, in light of the fact the maximum clock error X may occur after (+ X) of the start-point PS instead of before (- X) of the start-point PS. Therefore, when the length (duration) of the beacon signal is T8, the reception attempt upper limit time period T6 is represented by (X + T4 + T8) < T6 < 2 × X. The reception attempt upper limit time period T7 is represented by (X + T2 + T4 + T8) < T7 < (2 × X + T2), because the maximum delay time period T2 must be considered in addition to the maximum clock error X.

In the attempt to receive the beacon signal by the beacon reception checking unit 413, if the redundancy bit signal can be detected, then the following beacon signal can be received. Therefore, for the reception attempt upper limit time period T6 or T7, attempt is firstly made to detect the redundancy bit signal before initiating the attempt to receive the beacon signal. As shown in "(1) transmit beacon" in Fig. 6(c), the length (duration)of the redundancy bit signal is T4, but the redundancy bit signal is composed of repetition of " 1010..." as described above. A redundancy bit detection attempt time period T5 in which an attempt is made to detect the redundancy bit signal may be set to about a length with which the above repetition can be checked, and which falls within a range of the length (duration) T4 of the redundancy bit signal (T5 < T4).

A description will be specifically given of the operation for attempting to detect the redundancy bit signal in the reception attempt upper limit time period T6 or T7, in conjunction with the operation for attempting to receive the first beacon signal and the second beacon signal.

In the beacon reception checking unit 413 in the beacon reception radio communication device 40A, the reception attempt upper limit time period T6 or T7 is preset in view of the maximum clock error ±X, and the redundancy bit detection attempt time period T5 is preset. The beacon timing control unit 42 causes the beacon reception checking unit 413 to initiate the detection of the redundancy bit signal at a timing (start point PR) which is X(seconds) earlier than the transmission timing (start point PS) of the first beacon signal, in order to absorb the maximum clock error X. This detection is performed by repeating attempt to detect the redundancy bit signal plural times at intervals of the redundancy bit detection attempt time period T5 for the reception attempt upper limit time period T6 (seconds).

By repeating the attempt to detect the redundancy bit signal as described above, the redundancy bit signal can be received without fail within the reception attempt upper limit time period T6. This enables the beacon reception radio communication device 40A to receive the first beacon signal properly. Upon detection of the redundancy bit signal, the beacon reception radio communication device 40A may cancel the reception attempt upper limit time period T6, and continue to receive the first beacon signal.

Next, a description will be given of a case where the first beacon signal cannot be received but the second beacon signal is received. Since the length (duration) of the redundancy bit signal of the second beacon signal is T4, the beacon timing control unit 42 causes the beacon reception checking unit 413 to initiate the detection of the redundancy bit signal at a timing which is X(seconds) earlier than the transmission timing of the first beacon signal, in order to absorb the maximum clock error X. In this case, since the reception attempt upper limit time period T7 is preset, the detection is performed by repeating attempt to detect the redundancy bit signal plural times at intervals of the redundancy bit detection attempt time period T5 within the reception attempt upper limit time period T7.

By repeating the attempt to detect the redundancy bit signal as described above, the beacon reception radio communication device 40A can detect the redundancy bit signal without fail within the reception attempt upper limit time period T7. This enables the beacon reception radio communication device 40A to receive the second beacon signal properly. Upon detection of the redundancy bit signal, the beacon reception radio communication device 40A may cancel the reception attempt upper limit time period T7, and continue to receive the second beacon signal.

Specific examples of the lengths of the reception attempt upper limit time periods T6 and T7 will now be discussed. The reception attempt upper limit time period T6 may be set to a value at the longest, which value is twice as long as 10 (milliseconds) which is the length (duration) of first beacon signal. This is because, in an example of the present embodiment, the length (duration) of the first beacon signal is about 10 (milliseconds), and the maximum clock error X is typically calculated as a value smaller than 10 (milliseconds) which is the length (duration) of the first beacon signal, even when electric power consumption is considered. The reception attempt upper limit time period T7 may be set to a value a little larger than 110 (milliseconds). This is because in the example of the present embodiment, the maximum delay time period T2 is 90 (milliseconds) at maximum, and the maximum clock error X is about 10 (milliseconds) as described above. For these reasons, the reception attempt upper limit time periods T6 and T7 set for reception of the beacon signals do not substantially affect the electric power consumed in the beacon reception radio communication device 40A.

The transmission time period of the redundancy bit signal, and the transmission time periods of the beacon signals in "(1) transmit beacon" in Fig. 6(c), and the reception time periods of the beacon signals in "(2) receive beacon" in Fig. 6(c), are ideal, because there is no clock error between the clock unit 34 in the beacon transmission radio communication device 30A, and the clock unit 44 in the beacon reception radio communication device 40A. If the clock error occurs in actual case, the transmission time period of the redundancy bit signal, and the transmission time period of the beacon signal are deviated from the reception time period of the beacon signal, in a range of the maximum clock error ± X.

As should be understood from above, the beacon reception radio communication device 40A may repeat attempt to detect the redundancy bit signal of the first beacon signal once in every redundancy bit detection attempt time period T5, within the reception attempt upper limit time period T6 which is a little longer than the maximum clock error ± X. This allows the first beacon signal to be detected properly so long as the first beacon signals do not collide with each other. Because of this, the start-up time of the beacon reception checking unit 413 and the start-up time of the beacon timing control unit 42 can be made short to receive the first beacon signal. As a result, electric power consumption in the beacon reception radio communication device 40A can be suppressed.

If the beacon reception radio communication device 40A has failed in detection of the first beacon signal, it may repeat attempt to detect the redundancy bit signal of the second beacon signal once in every redundancy bit detection attempt time period T5, in the reception attempt upper limit time period T7 which is a little longer than a time period which is a sum of the maximum clock error ± X and the maximum delay time period T2. This allows the second beacon signal to be detected properly. The number of times an attempt is made to receive the second beacon signal is much less than the number of times an attempt is made to receive the first beacon signal. Further, since the redundancy bit signal is detected once in every time period T5 before receiving the second beacon signal, in the case where the second beacon signal is received, the reception of the second beacon signal affects very little electric power consumption in the overall the beacon reception radio communication device 40A.

As described above, in accordance with the present embodiment, "master radio terminals" broadly defined and "slave radio terminals" broadly defined need not have a standard electric wave timer function. This makes it possible to avert an increase in a circuit scale, and hence an increase in a cost. Moreover, even when communication areas of "master radio terminals" broadly defined overlap with each other and the beacon signals transmitted from these "master radio terminals" collide with each other and interfere with each other, the clock units can be synchronized with each other without causing an overflow in the radio communication system.

### [Modification Example]

Although in the present embodiment, the first beacon signal and the second beacon signal are transmitted alternately, the present invention is not limited to this. For example, the first beacon signal may be transmitted only once, and the second beacon signal may be transmitted plural times (e.g., four times), or the first beacon signal may be transmitted plural times (e.g., four times) and the second beacon signal may be transmitted only once. Furthermore, depending on the situation, only the second beacon signal may be transmitted. Note that a ratio between transmission of the first beacon signal and transmission of the second beacon signal may be decided in light of a balance between electric power consumption and endurance to a disturbance to the beacon signal.

In the present embodiment, the beacon transmission radio communication device 30A transmits the first beacon signal in the preset cycle P1 (beacon transmission cycle CS), and the beacon reception radio communication device 40A receives the first beacon signal in the preset cycle P2 (beacon reception cycle CR). That is, in the present embodiment, the transmission timing and reception timing of the beacon signal are cyclic patterns. The present invention is not limited to this, but the beacon signals may be transmitted and received in various timing patterns.

In the radio communication device of the present invention, the timing pattern P1 of the transmission timing of the first beacon signal or the timing pattern P2 of the reception timing of the first beacon signal may be (1) a cyclic pattern in which the timing of every transmission/reception occurs in a fixed cycle, or (2) a random pattern (non-cyclic pattern) in which the timing of every transmission/reception occurs in a unfixed cycle. This random pattern may be a perfectly random pattern in which the timing of every transmission/reception occurs at a different interval, an imperfectly random pattern in which the timing of every transmission/reception occurs at a different interval once in every plural times (i.e., pattern in which a fixed cycle occurs at plural timings of transmission/reception), or combination of these patterns. In a further alternative, patterns other than (1) or (2) may be used. In brief, in the present embodiment, a common timing pattern may be used in the beacon transmission radio communication device and in the beacon reception radio communication device.

Although in the above configuration, the short-distance radio communication network is described as an example of the radio communication system, the present invention is not limited to this, but may be applied to mobile communication, a local area network, a transportation radio, a municipal disaster management radio communication network, radio (wireless) meter reading systems for a gas meter, a tap water meter, an electric power meter, and other meters, etc.. The radio meter reading system will be specifically described in Embodiment 2.

The present invention may include, for example, radio communication devices having a configuration described below. Specifically, a radio communication device of the present invention comprises a beacon generating means, and a slot control means which activates the beacon generating means and controls the timing at which the beacon is transmitted on a regular basis, wherein the slot control means activates the beacon generating means to transmit a second beacon signal at a random timing or at a timing delayed for a predetermined time period in a beacon transmission timing II once in every predetermined number of times of beacon transmission, and the slot control means activates the beacon generating means promptly to transmit a first beacon signal, in a beacon transmission timing I other than the beacon transmission timing II.

Another radio communication device of the present invention is a radio communication device which receives a first beacon signal or a second beacon signal transmitted from a radio communication device including a beacon generating means, and a slot control means which activates the beacon generating means and controls the timing at which the beacon is transmitted on a regular basis, wherein the slot control means activates the beacon generating means to transmit the second beacon signal at a random timing or at a timing delayed for a predetermined time period in a beacon transmission timing II once in every predetermined number of times of beacon transmission, and the slot control means activates the beacon generating means promptly to transmit the first beacon signal, in a beacon transmission timing I other than the beacon transmission timing II, said radio communication device comprising: a beacon reception means; and a slot control means which activates the beacon reception means and controls a timing at which the beacon is received on a regular basis, wherein the slot control means activates the beacon reception means to receive the first beacon signal, and determines whether or not to activate the beacon reception means at a timing at which the second beacon signal is transmitted, depending on a reception state of the first beacon signal.

In the radio communication device, the slot control means may be configured to activate the beacon transmission timing I and the beacon transmission timing II alternately, and output the first beacon signal and the second beacon signal alternately.

In the radio communication device, the slot control means may be configured to operate only at the beacon transmission timing II.

In the radio communication device, the slot control means may be configured to activate the beacon reception means in a cycle which is an integer multiple of a timing at which the first beacon signal is transmitted, and to activate the beacon reception means at a timing at which the second beacon signal is transmitted next, only when the beacon reception means has failed in reception of the first beacon signal.

In the radio communication device, the slot control means may be configured to make a difference in reception time-out time period between a case where the first beacon signal is received and a case where the second beacon signal is received.

In the present invention, there is provided a program executed by a computer to implement at least a portion of the radio communication device having the above configuration. Therefore, at least a portion of the present invention can be implemented by a simple hardware by cooperating hard resources such as electric and information devices, a computer, etc.. Or, by storing the program in a storage medium or distributing the program using a communication line, the program can be distributed, updated, or installed easily,

A radio communication method of the present invention is a radio communication method including a beacon generating means, and a slot control means which activates the beacon generating means and controls the timing at which the beacon is transmitted on a regular basis, wherein the slot control means activates the beacon generating means to transmit the second beacon signal at a random timing or at a timing delayed for a predetermined time period in a beacon transmission timing II once in every predetermined number of times of beacon transmission, and the slot control means activates the beacon generating means promptly to transmit the first beacon signal in a beacon transmission timing I other than the beacon transmission timing II.

By using the radio communication device, the radio communication method and the program of the present invention, it is possible to prevent interference between the beacon signals and the communication system from overflowing even when a plurality of communication systems are located close to each other.

A radio communication system of the present invention is a radio communication system including a plurality of radio communication devices which transmit and receive a beacon signal between the radio communication devices, wherein a first beacon signal and a second beacon signal are used as the beacon signal, the radio communication system comprising: a beacon transmission radio communication device which transmits the first beacon signal periodically and transmits the second beacon signal at a timing deviated from a timing at which the first beacon signal is transmitted, and a beacon reception radio communication device which attempts to receive the first beacon signal periodically according to a cycle in which the first beacon signal is transmitted, and attempts to receive the second beacon signal according to a timing at which the second beacon signal is transmitted.

Or, a radio communication system of the present invention is a radio communication device for use in a radio communication system including a plurality of radio communication devices which transmit and receive a beacon signal between the radio communication devices, the radio communication device being configured to perform at least either transmission or reception of the beacon signal, the radio communication device comprising: a radio communication unit for performing radio communication, a communication control unit for controlling an operation timing of the radio communication unit to transmit or receive the beacon signal intermittently, the radio communication unit being configured to transmit or receive a first beacon signal and a second beacon signal as the beacon signal, the communication control unit executes first communication operation control for causing the radio communication unit to operate periodically to transmit or receive the first beacon signal periodically, and second communication operation control for causing the radio communication unit to operate at a timing deviated from an operation timing of the first communication operation control, to transmit or receive the second beacon signal at a timing deviated from the timing at which the first beacon signal is transmitted or received.

### (Embodiment 2)

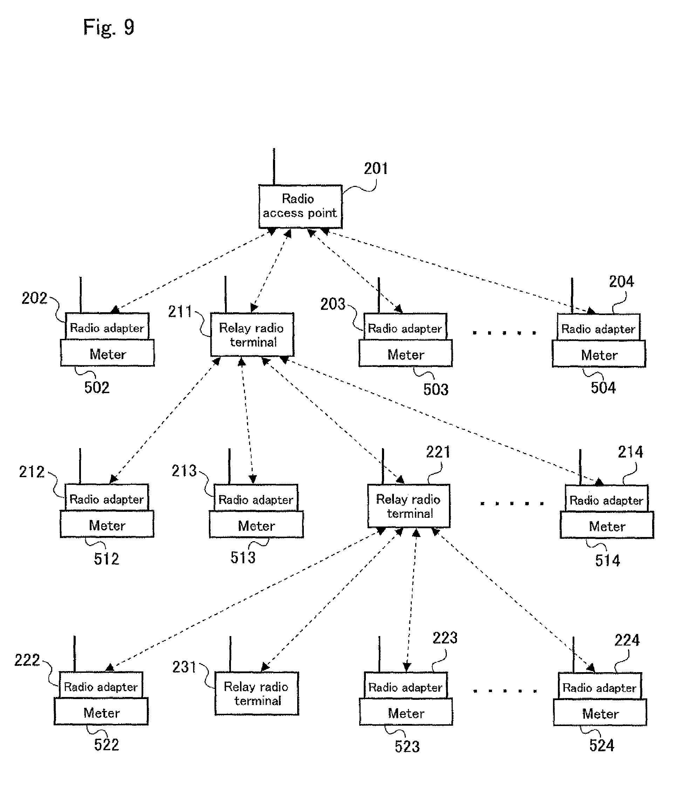

A radio communication system and a radio communication device according to Embodiment 2 of the present invention is applied to a radio (wireless) meter reading system for a gas meter. The radio communication system and the radio communication device according to the present embodiment will be described with reference to Figs. 9 to 11.

As shown in Fig. 9, the radio communication system according to the present embodiment includes a radio (wireless) access point 201, relay radio terminals 211, 221, 231, and radio (wireless) adapters 202 -204, 212∼214, 222∼224. The radio access point 201 corresponds to the master radio terminal 101 in Embodiment 1, the relay radio terminals 211, 221, 231 correspond to the relay radio terminals 111, 121, 131, respectively, in Embodiment 1, and the radio adapters 202 ∼204, 212∼214, 222∼224 correspond to the slave radio terminals 102∼ 104, 112∼114, 122∼124, respectively, in Embodiment 1. Gas meters 502 - 504, 512∼514, 522 -524 are connected to the radio adapters 202 ∼204, 212∼214, 222∼224, respectively.

In the radio (wireless) meter reading system for the gas meter, the radio access point 201 performs polling communication to gather in the radio access point 201, gas meter reading data from the gas meters 502 - 504, 512 ∼514, 522 -524 connected to the radio adapters 202 ∼204, 212∼214, 222∼224, respectively. The gathered gas meter reading data are transmitted to a data center via, for example, a public line connected to the radio access point 201. The relay radio terminals 211, 221, 231 may have only to relay gas meter reading data, but may alternatively function as "radio adapters." In this case, the gas meters are also connected to the relay radio terminals 211, 221, 231, respectively.

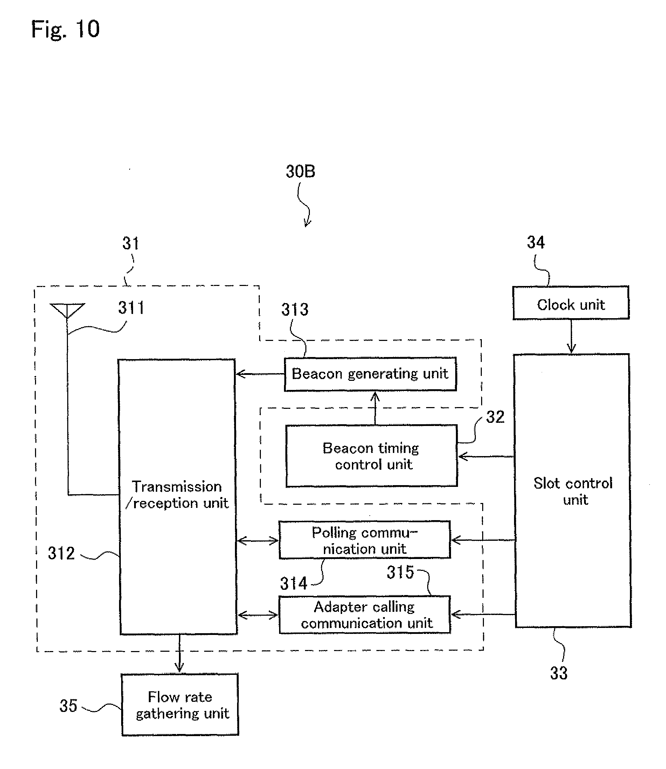

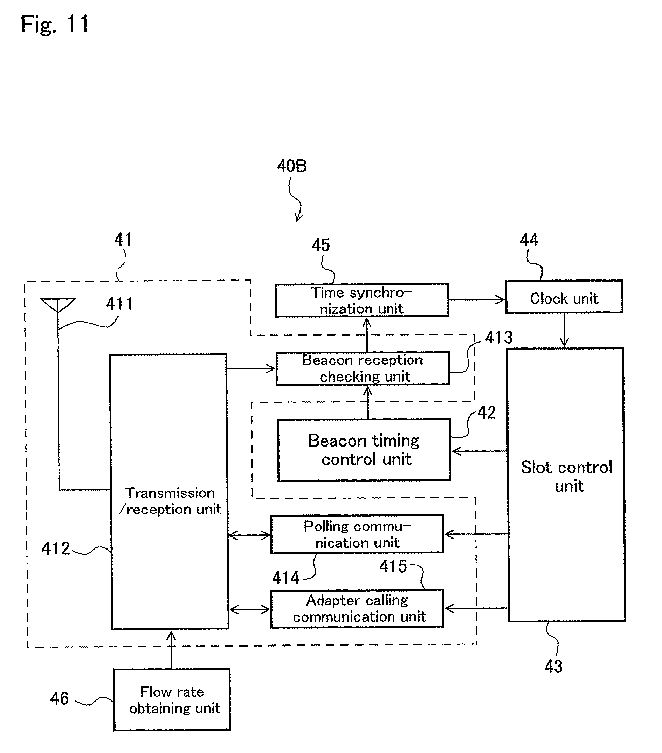

The radio access point 201, and the relay radio terminals 211, 221, 231 correspond to a beacon transmission radio (wireless) communication device 30B shown in Fig. 10, while the radio adapters 202 -204, 212∼214, 222∼224, and the relay radio terminals 211, 221, 231 correspond to a beacon reception radio (wireless) communication device 40B shown in Fig. 11.

The beacon transmission radio communication device 30B is fundamentally similar in configuration to the beacon transmission radio communication device 30A. The beacon transmission radio communication device 30B includes a flow rate gathering unit 35 for gathering gas meter reading data (i.e., gas flow rate data) obtained from the gas meters 502 - 504, 512 ∼514, 522 -524, transmitted from the beacon reception radio communication device 40B, and received in a transmission/reception unit 312. The beacon reception radio communication device 40B is fundamentally similar in configuration to the beacon transmission radio (wireless) communication device 30A in Embodiment 1. The beacon reception radio communication device 40B includes a flow rate obtaining unit 46 for obtaining gas meter reading data (i.e., gas flow rate data) from the gas meters 502 - 504, 512 ∼514, 522 ∼524, and outputting the gas meter reading data to a transmission/reception unit 412.

The polling communication performed in the polling communication unit 314 in the beacon transmission radio communication device 30B and in the polling communication unit 414 in the beacon reception radio communication device 40B is to transmit polling signals from the radio access point 201 to gather in the radio access point 201, the gas meter reading data from the gas meters 502 - 504, 512 ∼514, 522 ∼524. Adapter calling communication performed in adapter calling communication units 315, 415 is to receive the signals from the gas meters 502 - 504, 512 ∼514, 522 -524 connected to the radio adapters 202 ∼204, 212∼214, 222-224, respectively, and transmit them to the radio access point 201, and to the relay radio terminals 211,221,231. That is, the adapter calling communication unit 415 in the beacon reception radio communication device 40B transmits the gas meter reading data obtained in the flow rate obtaining unit 46 as adapter calling communication.

A problem unique to the radio meter reading system for the gas meter, rather than a typical radio communication system, will be specifically discussed.

A gas meter is operative by electric power of a battery which is not changed for 10 years, and is typically not provided with an AC electric power supply. For this reason, a radio communication device attached to the gas meter must be battery-driven and be operative for 10 years without a change of the battery. Therefore, the radio communication device receives a signal intermittently in a specified cycle. The radio communication device halts the reception (attempt to receive the signal) and enters a standby mode, if it fails in detection of an electric wave (radio wave) directed to itself. In this way, the radio communication device performs intermittent reception operation. The meter reading of the gas meter may be performed once per day at most, rather than frequently. Thus, the radio communication occurs less frequently.

In view of the communication frequency of the gas meter reading, in a typical radio meter reading system for a gas meter, an asynchronous (non-synchronous) scheme is used. The asynchronous scheme refers to a method in which only when information to be transmitted (transmitted information) occurs, the transmitted information affixed with a header signal longer than an intermittent reception cycle of a communicating party with which the radio communication device should communicate. The communicating party can detect the header signal longer than the intermittent reception cycle. Upon reception of the header signal, the communicating party can receive the transmitted information which is transmitted subsequently to the header signal. As the specific intermittent reception cycle, a relatively longer time period which is 20 (seconds) is typically set to suppress battery wasting.

In recent years, in order to achieve cost reduction, a one-to-plural radio (wireless) communication system intended to gather meter reading values of many gas meters using a single radio (wireless) access point has been developed. In addition, in order to increase the number of gas maters from which data is gathered by a radio access point, a one-to-plural radio communication system having a relay function has been developed. In such a one-to-plural radio communication system, the number of times communication is performed increases in the overall radio communication systems. As a result, in the conventional asynchronous scheme, it becomes necessary to transmit a header signal having a length (duration) of 20 (seconds) or more as an intermittent reception cycle per communication.

Because of the above fact, in the conventional radio meter reading system for the gas meter, a traffic in the overall radio communication system becomes exacerbated. In addition, the number of times a radio communication device receives a header signal which is not directed to that radio communication device, tends to increase, and a consumed current tends to increase. If a synchronization signal for allowing synchronization between a clock unit in a radio access point and a clock unit in a radio adapter cannot be received and a relatively long time period passes, an error of a transmission/reception timing increases, which tends to increase a time period for which data is received at intermittent reception timings increases, and hence to increase electric power consumption.

In contrast, in the radio meter reading system for the gas meter of the present embodiment, as described in Embodiment 1, an increase in a circuit scale can be averted and therefore a cost increase can be averted. Furthermore, even if the first beacon signals collide and interfere with each other, the clock units can be synchronized with other without occurrence of an overflow in the radio communication system by transmission and reception of the second beacon signal. Moreover, since the first beacon signal and the second beacon signal are transmitted and received very efficiently, an increase in electric power consumption can be suppressed more effectively.

Although in the present embodiment, gas flow rate data (gas meter reading data) are gathered automatically from the gas meters, the present invention is not limited to this, but a meter reading system for measuring a flow rate such as electricity may be used, as a matter of course.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention and all modifications which come within the scope of the appended claims are reserved.

### Industrial Applicability

As described above, the present invention is used suitably in fields of radio (wireless) communication systems such as a short-distance radio communication network, a mobile communication, a local area network, a transportation radio, a municipal disaster management network, wireless LAN, and radio meter reading systems for meters of gas, tap water, electric power, etc., and radio communication devices for use in these systems.

### Reference Signs Lists

30A beacon transmission radio communication device (master radio terminal)
31 radio communication unit
32 beacon timing control unit (communication control unit)
33 slot control unit (communication control unit)
34 clock unit
40A beacon reception radio communication device (slave radio terminal)
41 radio communication unit
42 beacon timing control unit (communication control unit)
43 slot control unit (communication control unit)
44 clock unit
45 time synchronization unit
101 master radio terminal (radio communication device)
102∼104 slave radio terminal (radio communication device)
111 relay radio terminal (radio communication device)
112∼114 slave radio terminal (radio communication unit)
121 relay radio terminal (radio communication device)
122∼ 124 slave radio terminal (radio communication device)
131 relay radio terminal (radio communication device)

## Claims

1. A radio communication device for use in a radio communication system including a plurality of radio communication devices which communicate a beacon signal between the radio communication devices, said radio communication device being configured to perform at least either transmission or reception of the beacon signal; said radio communication device comprising:
a radio communication unit for performing radio communication; and
a communication control unit for controlling an operation timing of the radio communication unit to communicate the beacon signal intermittently; **characterized in that**:
a first beacon signal and a second beacon signal are transmitted as the beacon signal;
the communication control unit controls an operation of the radio communication unit to transmit the first beacon signal in a preset timing pattern P1; and
the communication control unit controls the operation of the radio communication unit to transmit the second beacon signal upon a passage of a delay time period R which is shorter than a standby time period Q which is shorter than the timing pattern P1, after the standby time period Q has passed.

2. The radio communication device according to Claim 1, further comprising:
a clock unit for periodically generating a timing pulse defining a time interval;
wherein the first beacon signal and the second beacon signal are used to control for providing synchronization between an operation of the clock unit of the radio communication device and an operation of a clock unit of another radio communication device.

3. The radio communication device according to Claim 1,
wherein the radio communication device is configured to receive the first beacon signal and the second beacon signal;
the communication control unit controls the operation of the radio communication unit to attempt to receive the first beacon signal in a preset timing pattern P2; and
the communication control unit controls the operation of the radio communication unit to attempt to receive the second beacon signal according to a passage of the delay time period R which is shorter than the standby time period Q which is shorter than the timing pattern P2, after the standby time period Q has passed.

4. The radio communication device according to Claim 3,
wherein the communication control unit sets the timing pattern P1 or the timing pattern P2 as a cyclic pattern in which a timing of every transmission/reception is a fixed cycle, or a random pattern in which a timing of every transmission/reception is not a fixed cycle.

5. The radio communication device according to Claim 4,
wherein the standby time period Q is a value preset as a predetermined length; and
the delay time period R has a variable length and is set to a random value.

6. The radio communication device according to Claim 5,
wherein the second beacon signal contains information indicating a length of the delay time period R.

7. The radio communication device according to Claim 4,
wherein when the timing pattern P1 and the timing pattern P2 are the cyclic pattern,
the communication control unit controls the operation of the radio communication unit to attempt to receive the first beacon signal in a cycle which is an integer multiple of a cycle in which the first beacon signal is transmitted from the another radio communication device; and
the communication control unit controls the operation of the radio communication unit to receive the second beacon signal, only when the radio communication unit has failed in reception of the first beacon signal.

8. The radio communication device according to Claim 7,
wherein the communication control unit controls the operation of the radio communication unit to attempt to receive the first beacon signal and the second beacon signal within a preset reception attempt upper limit time period; and
the reception attempt upper limit time period is different between a case where the radio communication unit attempts to receive the first beacon signal and a case where radio communication unit attempts to receive the second beacon signal.

9. A radio communication system comprising:
a plurality of radio communication devices each of which is recited in any one of Claims 1 to 8 as communication terminals.

10. The radio communication system according to Claim 9, wherein
the radio communication device which transmits the first beacon signal and the second beacon signal is a master radio terminal which gathers data, among the plurality of radio communication devices; and
the radio communication device which receives the first beacon signal and the second beacon signal is a slave radio terminal which obtains data to be transmitted to the master radio terminal, among the plurality of radio communication devices.

11. The radio communication system according to Claim 10, wherein
the radio communication device which receives the first beacon signal and the second beacon signal transmitted from the master radio terminal, and transmits the first beacon signal and the second beacon signal to the slave radio terminal is a relay radio terminal which relays signals in communication between the master radio terminal and the slave radio terminal, among the plurality of radio communication devices.

12. The radio communication system according to Claim 10, wherein
the slave radio terminal includes a flow rate obtaining unit for obtaining flow rate data from a flow meter for measuring a flow rate of a fluid; and
the master radio terminal includes a flow rate gathering unit which receives the flow rate data from the slave radio terminal and gathers the flow rate data.

13. A radio communication method for use in a radio communication system including a radio communication device which transmits a beacon signal intermittently as a master radio terminal, and a radio communication device which receives the beacon signal intermittently as a slave radio terminal, said method being **characterized by** comprising the steps of:
transmitting a first beacon signal in a preset timing pattern P1 from the master radio terminal;
attempting to receive the first beacon signal in a preset timing pattern P2 in the slave radio terminal;
transmitting the second beacon signal from the master radio terminal, upon a passage of a delay time period R which is shorter than a standby time period Q which is shorter than the timing pattern P1, after the standby time period Q has passed; and
attempting to receive in the slave radio terminal the second beacon signal according to a passage of the delay time period R which is shorter than the standby time period Q which is shorter than the timing pattern P2, after the standby time period Q has passed.

14. A program described in a format which is readable by a computer incorporated in each of radio communication devices included in a radio communication system, the radio communication devices being a radio communication device which transmits a beacon signal as a master radio terminal, and a radio communication device which receives the beacon signal as a slave radio terminal, the program being executed on the computer such that transmission or reception of the beacon signal is performed; **characterized in that:**
the radio communication device is configured to transmit or receive a first beacon signal and a second beacon signal intermittently, as the beacon signal;
when the radio communication device is the master radio terminal, the computer executing the steps of: transmitting the first beacon signal in a preset timing pattern P1; and transmitting the second beacon signal upon a passage of a delay time period R which is shorter than a standby time period Q which is shorter than the timing pattern P1, after the standby time period Q has passed; and
when the radio communication device is the slave radio terminal, the computer executing the steps of: attempting to receive the first beacon signal in a preset timing pattern P2; and attempting to receive the second beacon signal according to a passage of the delay time period R which is shorter than the standby time period Q which is shorter than the timing pattern P2, after the standby time period Q has passed.
